# EUROPEAN PATENT APPLICATION

(11) **EP 4 678 349 A1**
(43) Date of publication of application: **14.01.2026**
(21) Application number: 24767374.2
(22) Date of filing: 04.03.2024
(51) Int. Cl.: B25J 9/16, B25J 5/00, B25J 13/08, B25J 19/00, B25J 19/02, B62D 57/028

(54) **ROBOT AND METHOD FOR CONTROLLING ROBOT**

(30) Priority: 06.03.2023 KR 20230029043
(71) Applicant: LG ELECTRONICS, INC., Seoul 07336 (KR)
(72) Inventor: KWAK, Donghoon, Seoul 08592 (KR)
(74) Representative: Schott, Jakob Valentin
(86) International application number: PCT/KR2024/002753
(87) International publication number: WO 2024/186085

(57) **Abstract**

The present invention relates to a robot, and the robot includes a robot body in which a motor and a battery are accommodated, a pair of leg units provided on the robot body, a pair of wheels rotatably coupled to the pair of leg parts, respectively, an arm including a rotational coupling unit rotatably coupled to both side surfaces of the robot body and a connector connecting the pair of rotational coupling units, and a functional module detachably coupled to the robot body and moved together with the robot body, wherein, when an obstacle is detected, the robot body may be moved upward to lift the functional module, thereby preventing the robot from being caught on the obstacle and toppling over.

## Description

### [Technical Field]

The present invention relates to a robot and a method of controlling a robot. More specifically, the present invention relates to a robot capable of providing various services according to an input instruction of a user, and a method of controlling a robot.

### [Background Art]

Recently, with the advancement of a robot technology, the use of robots is increasing not only in industrial fields but also at home.

Home robots are robots that perform home tasks on behalf of people, such as helping with housework such as cleaning or controlling home appliances, or robots that act as a user's assistant or provide training to the user using artificial intelligence (AI), robots that replace companion animals and the like.

However, conventional home robots have limitations in that they perform only any one of the above functions and may not perform various functions depending on the user's needs or circumstances.

Meanwhile, there are not only robots that perform functions in a state of being fixed at a specific position but also movable mobile robots. In particular, in the case of robots used at home, the mobile robots that replace the user or move around the home while following the user are mainly used.

Among the mobile robots, two-wheeled robots with two wheels have advantages of being easy to store because they occupy a small area of ground and being easily used in homes with a relatively limited space due to a small rotation radius when the robot changes a direction.

Since these two-wheeled robots need to maintain balance with only two wheels, it is necessary to maintain a balance while overcoming obstacles and the like.

In this regard, US Patent Publication No. 2020-0362972A1 (November 19, 2020) discloses a mobile robot that moves using a pair of legs provided with wheels.

The mobile robot may be moved by rotating the wheels provided on the pair of legs while lifting an object using arms.

However, since the arms of the mobile robot has only the function of lifting an object, there is a limitation that the function of the robot cannot be expanded through the arms.

However, in order to maintain balance during traveling or stopping, a body to which a leg unit is coupled is rotated in the form of a pendulum, and counter-balance is rotated in response to the rotation of the body, thereby maintaining the balance of the mobile robot.

Accordingly, the mobile robot needs to continuously operate a motor to rotate the wheels and the counter-balance in order to maintain a stable attitude. In this case, the mobile robot has limitations, such as the need to continuously consume electrical energy even when stationary or waiting.

In addition, the mobile robot can maintain balance on flat surfaces, but is limited in its ability to maintain balance when overcoming obstacles with different heights.

Meanwhile, Korean Laid-Open Patent No. 2021-0064016 (June 2, 2021) discloses a traveling module capable of lifting a driving unit while traveling along floors with various heights.

The traveling module can easily pass over obstacles and the like by lifting a portion of the wheel.

However, the traveling module rotates six wheels to travel along the ground, and even when overcoming an obstacle, at least four wheels are in contact with the ground or obstacle.

Accordingly, the traveling module is not applicable to the two-wheeled robots that travel using two wheels.

### [Disclosure]

### [Technical Problem]

The present invention is directed to providing a robot capable of performing various functions according to situations or a user instruction.

In addition, the present invention is directed to providing a robot in which a function in use may be changed to a new function or the new function may be added to the function in use.

In addition, the present invention is directed to providing a robot capable of preventing itself from being caught on an obstacle and toppling over while passing over the obstacle.

In addition, the present invention is directed to providing a robot that does not need to change a route to enter a long obstacle in a direction perpendicular to a longitudinal direction of the obstacle.

In addition, the present invention is directed to providing a robot capable of preventing one wheel of the robot from becoming caught on an obstacle and losing balance when entering the obstacle at an oblique angle.

In addition, the present invention is directed to providing a robot capable of reducing the spatial limitations on the robot's ability to travel.

### [Technical Solution]

According to the present invention, there is provided a robot including a robot body in which a motor and a battery are accommodated, a pair of leg units provided on the robot body, a pair of wheels rotatably coupled to the pair of leg parts, respectively, an arm including a rotational coupling unit rotatably coupled to both side surfaces of the robot body and a connector connecting the pair of rotational coupling units, and a functional module detachably coupled to the robot body and moved together with the robot body.

In addition, the robot according to the present invention may further include a sensor unit disposed on the robot body or the leg unit and may measure a distance to an obstacle.

In this case, when the sensor unit detects a height difference of a predetermined height or more from a ground, a controller may detect the presence of the obstacle.

In this case, when the robot body is positioned within a preset reference distance from an obstacle of a predetermined height or more, the robot body may move upward away from the ground.

In addition, the functional module in contact with the ground may be lifted together with the robot body.

Accordingly, when the robot body passes over the obstacle, the functional module can be prevented from being caught on the obstacle and causing the robot body to topple over.

Meanwhile, the functional module may include a module body, and a coupling unit disposed on an upper portion of the module body and coupled to the robot body, and the functional module may have a rear side heavier than a front side on which a suction port is disposed with respect to the coupling unit.

Accordingly, when the functional module is lifted by the robot body, one end portion disposed closer to the obstacle may be disposed farther from the ground than the other end portion disposed away from the obstacle.

That is, the front end of the functional module may be lifted higher than the rear end thereof. Accordingly, when the robot body moves forward and passes over the obstacle, the front end of the functional module can be prevented from being caught on the obstacle.

In addition, the overall center of gravity of the robot with the functional module lifted can be lowered, making it easier for the robot to maintain balance.

Meanwhile, when one of the pair of wheels comes into contact with the obstacle, the wheel in contact with the obstacle may move upward.

In this case, the height from the ground to the robot body may be maintained.

Accordingly, only the wheel that first comes into contact with the obstacle may be lifted and may climb onto the obstacle.

In addition, the robot body may maintain traveling without shaking left and right.

Accordingly, the robot may lift one wheel onto the obstacle while maintaining balance.

Accordingly, the robot body may enter the obstacle at an oblique angle. In addition, the wheel can be prevented from being caught on the obstacle, thereby preventing the robot body from losing balance.

There is provided a method of controlling a robot including a pair of leg units and wheels coupled to the leg units, respectively, including an obstacle detecting operation of detecting an obstacle disposed on a ground while the robot rotates the wheels and travels along the ground, and a module lifting operation of lifting a functional module coupled to the robot when a distance between the robot and the obstacle is within a preset reference distance.

In addition, the method may further include, after the module lifting operation, a balance maintaining operation of lifting the wheel in contact with the obstacle when one of the pair of wheels comes into contact with the obstacle.

In this case, in the obstacle detecting operation, the obstacle may be detected by detecting a height difference of a predetermined height or more from the ground through at least one sensor.

In this case, in the module lifting operation, the robot body may be lifted by extending the bent leg unit.

Accordingly, in the module lifting operation, a length from the ground to an upper end of the robot may be increased.

Meanwhile, in the balance maintaining operation, when the robot tilts at a preset reference angle or more with respect to a vertical line, one of the pair of wheels may be moved in a vertical direction.

In addition, in the balance maintaining operation, the pair of wheels may be rotated at different heights from the ground.

Accordingly, the robot may pass over the obstacle while preventing itself from tilting to one side in a left-right direction.

### [Advantageous Effects]

As described above, according to the robot of the present invention, by rotating both sides of the robot body and a pivotally-mounted arm, various operations can be implemented, and the robot's function can be expanded or modified.

In addition, the functional module can be coupled to a lower portion of the robot body according to user instruction or situations, and various functions can be performed through the functional module.

In addition, by replacing the robot mask detachably coupled to the robot body, the robot's design can be modified or new functions can be added.

In addition, since the space in which the functional module will be coupled is formed between the pair of wheels and the leg unit, the overall volume of the robot body and the functional module are not significantly increased even when coupled.

In addition, when the functional module is coupled to the robot body, the functional module can also be in contact with the ground, thereby easily maintaining the robot's balance.

In addition, when the robot body passes over the obstacle while coupled to the functional module, by raising the robot body to lift the functional module, it is possible to prevent the functional module from being caught on an obstacle and toppling over.

In addition, in a state in which the functional module is lifted, the front end of the functional module is positioned higher than the rear end, thereby preventing the front end of the functional module from being caught even on a high obstacle, and the lower surface of the functional module can be in contact with the obstacle, thereby enabling the robot to easily pass over the obstacle.

In addition, even when the robot enters an obstacle at an oblique angle, the robot can pass over the obstacle without changing the route.

In addition, when the robot enters an obstacle at an oblique angle, the wheel in contact with the obstacle can be raised first, thereby preventing one wheel of the robot from being caught on the obstacle and losing balance.

In addition, by maintaining the height of the robot body in a state in which one wheel is raised over the obstacle, it is possible to prevent the robot body from tilting to one side, thereby preventing the robot from toppling over.

In addition, by reducing the region in which the robot cannot travel, the robot can be used without spatial limitations.

### [Description of Drawings]

FIG. 1 is a perspective view for describing a robot according to one embodiment of the present invention.
FIG. 2 is a front view of the robot according to one embodiment of the present invention.
FIG. 3 is a side view of the robot according to one embodiment of the present invention.
FIG. 4 is a rear view of the robot according to one embodiment of the present invention.
FIG. 5 is a plan view of the robot according to one embodiment of the present invention.
FIG. 6 is a bottom view of the robot according to one embodiment of the present invention.
FIG. 7 is a view for describing a coupling relationship between a robot mask and a robot body in the robot according to one embodiment of the present invention.
FIG. 8 is a perspective view for describing a functional module in the robot according to one embodiment of the present invention.
FIG. 9 is a view for describing a state in which the robot body and the functional module are coupled in the robot according to one embodiment of the present invention.
FIG. 10 is a block diagram for describing a control configuration of the robot according to one embodiment of the present invention.
FIG. 11 is a flowchart for describing a method of controlling a robot according to one embodiment of the present invention.
FIG. 12 is a view for describing a situation in which the robot according to one embodiment of the present invention detects an obstacle.
FIG. 13 is a view for describing a situation in which the robot according to one embodiment of the present invention detects an obstacle while coupled to the functional module.
FIG. 14 is a view for describing a situation in which the robot according to one embodiment of the present invention lifts the functional module to pass over an obstacle while coupled to the functional module.
FIG. 15 is a view for describing a situation in which the robot according to one embodiment of the present invention enters an obstacle at an oblique angle.
FIG. 16 is a view for describing a situation in which the robot according to one embodiment of the present invention places one wheel on an obstacle.
FIG. 17 is a view for describing the operation of the robot according to one embodiment of the present invention maintaining balance while placing one wheel on the obstacle.

### [Mode for Invention]

Hereinafter, exemplary embodiments of the present invention will be described in detail with reference to the accompanying drawings.

Since the present invention may have various changes and various embodiments, specific embodiments are shown in the accompanying drawings and specifically described in the detail descriptions. This is not intended to limit the present invention to specific embodiments and should be construed to include all modifications, equivalents, and substitutes included in the spirit and technical scope of the present invention.

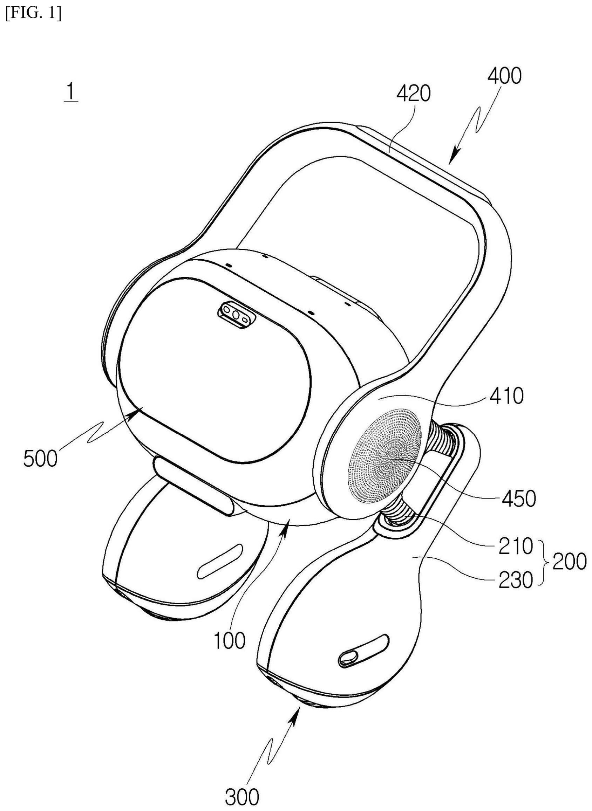

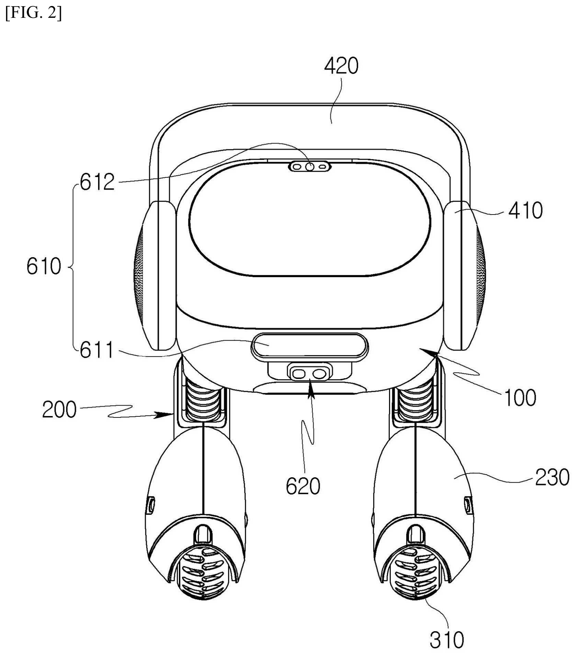

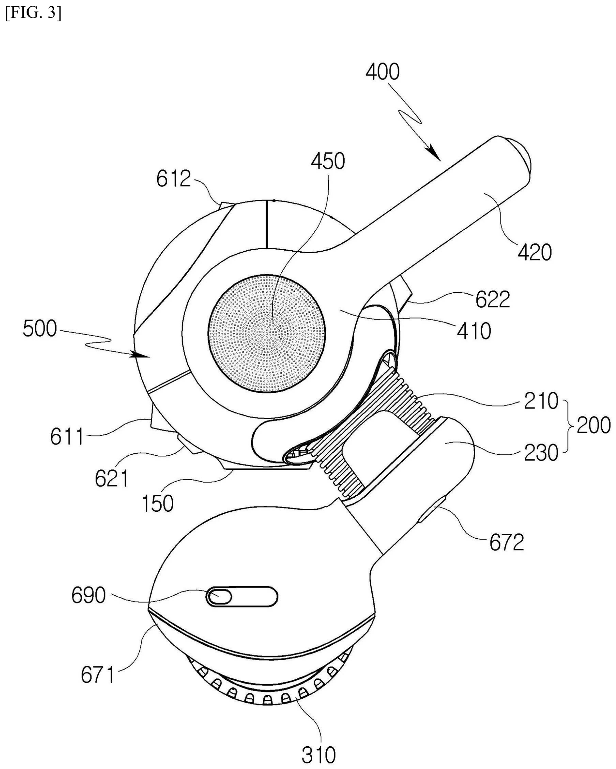

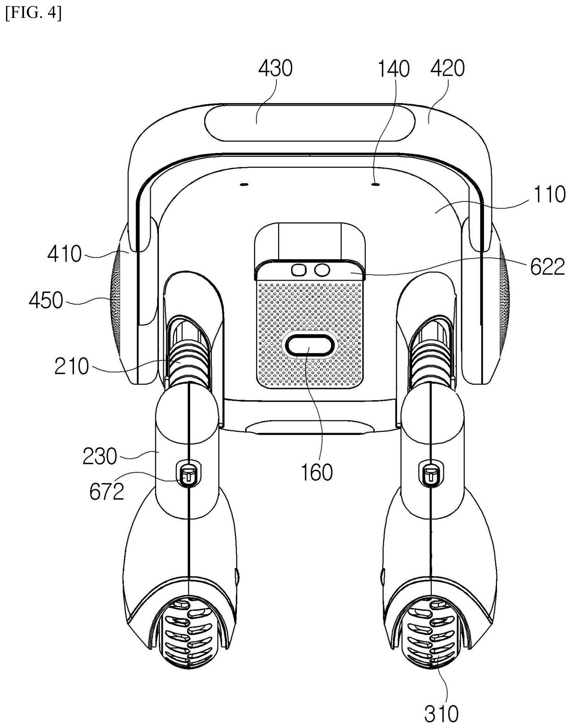

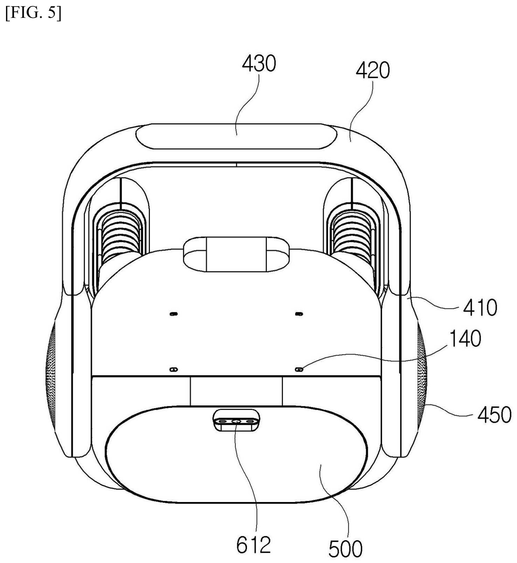

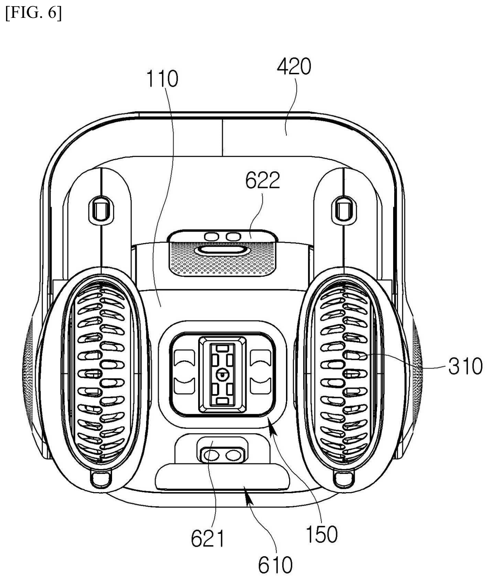

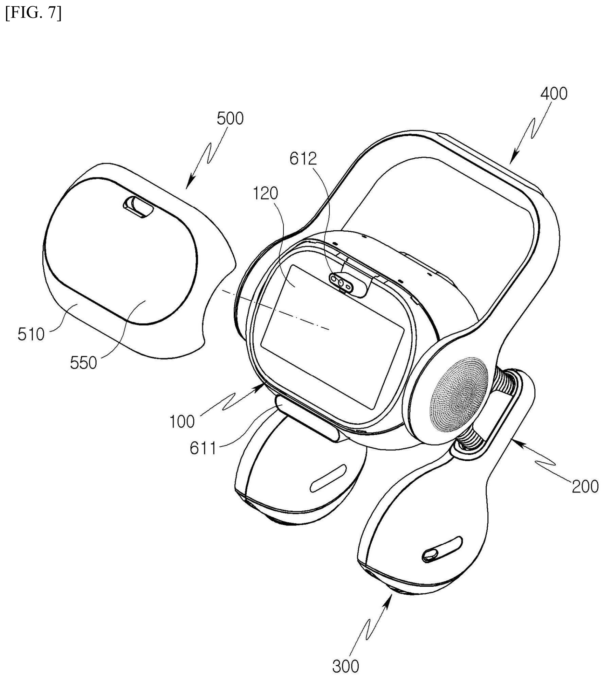

FIGS. 1 to 6 show a perspective view, a front view, a side view, a rear view, a plan view, and a bottom view of a robot according to one embodiment of the present invention, respectively, and FIG. 7 is a view for describing a coupling relationship between a robot mask and a robot body in the robot according to one embodiment of the present invention.

Referring FIGS. 1 to 6, a robot 1 according to one embodiment of the present invention will be described as follows.

The robot 1 according to the embodiment of the present invention is placed on a floor to move along a ground B. Accordingly, the following description will be made by setting a vertical direction based on a state in which the robot 1 is placed on the floor.

In addition, for the sake of description, a side on which an obstacle detection camera 610 to be described below is disposed is defined as a front of the robot 1. In addition, the following description will be made by setting a direction opposite to the front as the rear of the robot 1.

A "lowest portion" of each component described in the embodiment of the present invention may be a portion of each component that is located to be lowest when the robot 1 according to the embodiment of the present invention is used while placed on the floor or may be a portion closet to the floor.

The robot 1 according to the embodiment of the present invention includes a robot body 100, a leg unit 200, a wheel unit 300, an arm 400, and a robot mask 500. In this case, the leg unit 200 is coupled to the robot body 100, and the wheel unit 300 is coupled to the leg unit 200. In addition, the arm 400 is pivotally coupled to both side surfaces of the robot body 100. In addition, the robot mask 500 is detachably coupled to the robot body 100.

### Robot body

The leg unit 100 of the robot 1 according to one embodiment of the present invention will be described with reference to FIGS. 1 to 7 as follows.

Components constituting the robot 1 may be coupled to the robot body 100. For example, the robot mask 500 may be detachably coupled to the robot body 100. In addition, the arm 400 is pivotally coupled to the robot body 100. The arm 400 is pivotally coupled to both end portions of the robot body 100. In addition, the robot body 100 may implement a standby attitude for power saving or an attitude for the robot to stand up after toppling over through the arm 400. A lower portion of the robot body 100 may be detachably coupled to a functional module 900. The robot body 100 may be coupled to the functional module 900 and may perform additional functions.

Some components constituting the robot 1 may be accommodated inside the robot body 100.

A body housing 110 may form an exterior of the robot body 100. An internal space of the body housing 110 may accommodate one or more motors including a suspension motor MS, one or more sensors, and a battery 800.

In addition, although not shown, at least one bumper may be provided inside the body housing 110.

The bumper may be provided to be relatively movable with respect to the body housing 110. For example, the bumper may be coupled to the body housing 110 so as to be reciprocally movable in a front-rear direction of the body housing 110.

The bumper may be coupled along a portion or the entirety of a front edge of the body housing 110. In addition, the bumper may be disposed on an inner rear side of the body housing 110.

With this configuration, when the robot 1 collides with another object or person, the bumper can protect the robot body 100 and components accommodated inside the robot body 100 by absorbing an impact applied to the robot body 100.

A pair of leg units 200 are coupled inside the body housing 110. The pair of leg units 200 may be exposed to the outside through the body housing 110.

Specifically, an upper leg 210 may be rotatably coupled inside the body housing 110. For example, a link frame (not shown) to which the upper leg 210 is coupled may be provided inside the body housing 110.

In addition, the suspension motor MS may be accommodated inside the body housing 110. For example, the suspension motor MS may be disposed in the link frame (not shown). The suspension motor MS may be connected to the upper leg 210.

A pair of leg guide holes 111 may be formed in the body housing 110. For example, the pair of leg guide holes may be formed in parallel in the front-rear direction of the body housing 110.

With this configuration, the leg unit 200 may move while rotating along the leg guide holes and guide a rotational movement range of the leg unit 200.

The body housing 110 may be formed to have a horizontal width (or a diameter) larger than a vertical height. For example, the body housing 110 may be formed in a shape similar to an ellipsoid.

The robot body 100 may assist the robot 1 in forming a stable structure and provide a structure that is advantageous for maintaining balance when the robot 1 moves (travels).

The robot body 100 may be disposed vertically above wheels 310 to be described below. A load of the robot body 100 may be transmitted to the wheel 310 through the leg unit 200, and the wheel 310 may support the leg unit 200 and the robot body 100. With this configuration, the wheel 310 can stably support the load of the robot body 100.

The robot body 100 may include a display 120. The display 120 may be coupled to the body housing 110. The display 120 may be formed in a flat shape. The display 120 may be disposed at a predetermined angle with respect to the ground. For example, the display 120 may be disposed at a location facing an upper front side. With this configuration, when the robot 1 enters a user, the display 120 may be made visible when the user views the robot 1.

Meanwhile, the display 120 may visually convey information on an operating state of the robot 1 to the user.

The display 120 may be formed as one element of a light emitting diode (LED), a liquid crystal display (LCD), a plasma display panel (PDP), and an organic light emitting diode (OLED).

The display 120 may display information such as operating time information of the robot 1, battery 800 power information, etc.

According to an embodiment, the display 120 may be an input unit 125. That is, the display 120 may receive control instructions from the user. For example, the display 120 may be a touch screen that visually shows an operating state and receives the control instructions from the user.

The display 120 may display a facial expression of the robot 1. Alternatively, the display 120 may display the pupils of the robot 1. A current status of the robot 1 may be represented by an emotion personified through the shape of the face or the shape of the pupils displayed on the display 120. For example, when the user goes out and returns home, the display 120 may display a smiling facial expression or smiling eye shape. Accordingly, the user may feel the interaction with the robot 1.

A charging terminal may be disposed on the body housing 110. For example, the charging terminal may be disposed to face the ground. For example, the charging terminal may be disposed to face the ground. As another example, the charging terminal may be disposed at a predetermined angle with respect to the ground. With this configuration, when the robot 1 is coupled to a robot charging stand (not shown), the charging terminal may be in contact with a terminal provided on the robot charging stand (not shown).

The charging terminal may be electrically connected to the robot charging stand (not shown). With this configuration, the robot 1 may receive power through the charging terminal. The power supplied to the charging terminal may be supplied to the battery 800. In addition, the robot 1 may receive an electric signal through the charging terminal. A controller 700 may receive the electric signal transmitted through the charging terminal.

A microphone 140 may be disposed on the body housing 110. The microphone 140 may be disposed as a plurality of microphones in the body housing 110. For example, four microphones 140 may be disposed on an upper side of the body housing 110. With this configuration, the microphone 140 may detect sounds coming from various directions and detect a location of a sound source.

A module coupling unit 150 may be disposed on a lower portion of the body housing 110. The module coupling unit 150 is detachably coupled to the functional module 900. Specifically, the module coupling unit 150 may be selectively coupled to or separated from the functional module 900.

For example, the module coupling unit 150 may be formed as an electromagnet and may selectively apply a magnetic force (attractive force) to the functional module 900 depending on whether power is supplied. As another example, the module coupling unit 150 may be hook-coupled to a coupling unit 930 of the functional module 900. In this case, coupling strength between the robot body 100 and the functional module 900 can be increased.

In this case, a connection terminal may be disposed on the module coupling unit 150. With this configuration, the module coupling unit 150 may be coupled to a detachable unit formed of a metal material (or an electromagnet) provided on the functional module 900 at an accurate position and may guide the connection terminal to be in contact with the corresponding terminal provided on the functional module 900 at an accurate position.

The connection terminal may be electrically connected to the functional module 900. The connection terminal may be in contact with and electrically connected to the corresponding terminal provided on the functional module 900.

With this configuration, the power of the robot body 100 may be supplied to the functional module 900 through the connection terminal. In addition, the robot body 100 may transmit and receive electrical signals to and from the functional module 900 through the connection terminal.

Meanwhile, the detailed description of the functional module 900 will be made below.

A manipulation unit 160 may be disposed on the body housing 110. For example, the manipulation unit 160 may be disposed behind of the body housing 110.

The manipulation unit 160 may be manipulated by a user, and the robot 1 may be turned on and off by manipulating the manipulation unit 160.

The manipulation unit 160 may be provided to be pushed on the body housing 110 or provided to pivot in a left-right direction according to an embodiment.

For example, the manipulation unit 160 may be a button. Accordingly, the user may turn on the robot 1 by pushing the manipulation unit 160 in a state in which the robot 1 is turned off. In addition, the user may turn off the robot 1 by pushing the manipulation unit 160 in a state in which the robot 1 is turned on.

Meanwhile, the obstacle detection camera 610 may be disposed at the front of the body housing 110. According to an embodiment, the obstacle detection camera 610 may be disposed as a plurality of obstacle detection camera. For example, a first detection camera 611 may be disposed on a front lower portion of the body housing 110, and a second detection camera 612 may be disposed on a front upper portion of the body housing 110. In this case, the obstacle detection camera 610 may be disposed on a center line passing through the center of the body housing 110 in the left-right direction. With this configuration, the obstacle detection camera 610 may detect objects or people disposed in front of the robot 1.

In addition, an IR sensor 620 may be disposed on the body housing 110. According to an embodiment, the IR sensor 620 may be disposed as a plurality of IR sensors. For example, a first IR sensor 621 may be disposed on a front lower portion of the body housing 110, and a second IR sensor 622 may be disposed at the rear of the body housing 110. With this configuration, the IR sensor 620 may detect a position of a light source that generates infrared rays.

The IR sensor 620 may be disposed close to the obstacle detection camera 610. For example, the first IR sensor 621 may be disposed directly below the first obstacle detection camera 611.

With this arrangement, the IR sensor 620 may detect light emitted by a lamp of the functional module 900 or the robot charging stand (not shown), and when the robot body 100 enters the lamp, the obstacle detection camera 610 may detect the shape of the functional module 900 or the robot charging stand (not shown).

### Leg unit

The leg unit 200 of the robot 1 according to one embodiment of the present invention will be described with reference to FIGS. 1 to 7 as follows.

The leg unit 200 may be coupled to the robot body 100 to support the robot body 100. For example, the leg unit 200 is provided as a pair of leg units, each of which is coupled to the inside of the body housing 110. The pair of leg units 200 may be disposed symmetrically (line symmetrically). In this case, at least a portion of the leg unit 200 is disposed closer to the ground than the robot body 100. Accordingly, the robot body 100 may travel while standing on the ground using the pair of leg units 200. That is, gravity applied to the robot body 100 may be supported by the leg unit 200, and a height of the robot body 100 may be maintained.

The leg unit 200 includes an upper leg 210 and a lower leg 230. In this case, the upper leg 210 is rotatably coupled to the robot body 100 and the lower leg 230.

Meanwhile, although not shown, the upper leg 210 includes a first link and a second link. In this case, the first link the second link are rotatably coupled to the robot body 100 and the lower link 230, respectively. That is, the first link and the second link are coupled to the robot body 100 and the lower leg 230, respectively.

The first and second links are disposed inside an upper link cover and are not exposed to the outside. The upper link cover may be formed in a corrugated tube shape to accommodate the first and second links therein, and the upper link cover may be formed to expand and contract in length according to the rotation of the upper leg 210.

The first link is coupled to inner left and right sides of the robot body 100.

The first link is connected to the suspension motor MS. For example, the first link may be connected to a shaft of the suspension motor MS either directly or through a gear. With this configuration, the first link receives a driving force from the suspension motor MS.

The first link is formed in a frame shape, with one side in a longitudinal direction connected to the suspension motor MS and the other side in the longitudinal direction coupled to the lower leg 230. In this case, the one side of the first link connected to the suspension motor MS may be disposed away from the ground than the other end coupled to the lower leg 230.

The one side of the first link is coupled to a leg support (not shown) provided inside the body housing 110. The first link may be rotatably coupled to the leg support. For example, the one side of the first link may be formed in a disk or circular plate shape. Accordingly, the one side of the first link may be connected to the suspension motor MS through the leg support.

The one side of the first link is connected to the suspension motor MS. For example, the one side of the first link may be fixedly coupled to the shaft of the suspension motor MS. With this configuration, when the suspension motor MS is driven, the one side of the first link may be rotated in conjunction with the rotation of the shaft of the suspension motor MS.

The other side of the first link is rotatably coupled to the lower leg 230. For example, a through hole may be formed on the other side of the first link. The shaft may be rotatably coupled through the through hole. Two end portions of the shaft in the longitudinal direction may be coupled to the lower leg 230.

With this configuration, the shaft may become an axis about which the first link/or the lower leg 230 rotate. Accordingly, the first link and the lower leg 230 may be connected to be relatively rotatable.

Although not shown, the leg unit 200 may further include a gravity compensator. The gravity compensator compensates for the robot body 100 vertically moving downward due to gravity. That is, the gravity compensator provides a force to support the robot body 100.

For example, the gravity compensator may be a torsion spring. The gravity compensator may be wound to surround an outer surface of the first link. In addition, one end portion of the gravity compensator may be inserted into and fixedly coupled to the first link, and the other end portion of the gravity compensator may be inserted into and fixedly coupled to the lower leg 230.

The gravity compensator applies a force (rotational force) in a direction in which an angle between the first link and the lower leg 230 increases. For example, both end portions of the gravity compensator are pre-folded to apply a restoring force in the direction in which the angle between the first link and the lower leg 230 increases. Accordingly, even when gravity is applied to the robot body 100 in a state in which the robot 1 is placed on the ground, the angle between the first link and the lower leg 230 may be maintained within a predetermined angle range.

With this configuration, it is possible to prevent the robot body 100 from moving downward to the ground even when the suspension motor MS is not driven. Accordingly, the gravity compensator can prevent energy loss due to the driving of the suspension motor MS and maintain the height of the robot body 100 to a predetermined distance or more from the ground.

The second link is coupled to the inner left and right sides of the robot body 100. For example, the second link may be coupled to a leg support (not shown) provided inside the body housing 110. That is, the second link may be coupled to the leg support (not shown) to which the first link is coupled.

The second link is formed in a frame shape, with one side in the longitudinal direction coupled to the leg support (not shown) and the other side in the longitudinal direction coupled to the lower leg 230.

The second link may accommodate an electric wire. For example, a space in which the electric wire may be accommodated may be formed inside the second link. Accordingly, power of the battery 800 may be supplied to the wheel unit 300 through the electric wire. In addition, the electric wire can be prevented from being exposed to the outside.

The one side of the second link is rotatably coupled to the leg support. For example, although not shown, a shaft coupled to the leg support may be coupled to pass through the one side of the second link. A hollow may be formed in the shaft. The electric wire may pass through the hollow. With this configuration, it is possible to prevent the electric wire through which power is supplied from the battery 800 to a wheel motor MW from being exposed to the outside.

The other side of the second link is rotatably coupled to the lower leg 230. Specifically, the other end portion of the second link is rotatably coupled to the lower leg 230 through the shaft. For example, the other side of the second link may be formed in a disk shape, and the shaft may be coupled to pass through the other side of the second link. In addition, both end portions of the shaft in the longitudinal direction may be coupled to the lower leg 230. With this configuration, the shaft may become an axis about which the second link/or the lower leg 230 rotate. Accordingly, the second link and the lower leg 230 may be connected to be relatively rotatable.

The lower leg 230 is coupled to the first link and the second link and coupled to the wheel unit 300.

The lower leg 230 is formed in a frame shape, with one side in the longitudinal direction coupled to the first link and the second link and the other side in the longitudinal direction coupled to the wheel unit 300.

The one side of the lower leg 230 in the longitudinal direction is coupled to the first link and the second link. For example, a space may be formed on the one side of the lower leg 230 to accommodate the first link and the second link. That is, the one side of the lower leg 230 may be formed in the shape of a pair of parallel frames, and the first link and the second link may be accommodated in the space between the pair of frames.

Here, two shafts may be disposed in parallel between the pair of frames. That is, both end portions of each of the two shafts may be coupled to the pair of frames. In addition, each shaft may pass through the first link and the second link. In this case, the first link may be disposed at a position farther forward and downward than the second link. That is, the shaft passing through the first link may be disposed closer to the wheel 310 than the shaft passing through the second link.

Accordingly, the first link and the second link may be coupled to the lower leg 230 to be rotatable relatively.

The other side of the lower leg 230 in the longitudinal direction is coupled to the wheel unit 300. The other side of the lower leg 230 in the longitudinal direction may be formed to cover at least a portion of the wheel 310. For example, the other side of the lower leg 230 in the longitudinal direction may be formed to cover the center of rotation of the wheel 310, and a space in which the wheel 310 may be rotatably accommodated may be formed in the lower leg 230.

In addition, the wheel motor MW may be accommodated inside the other side of the lower leg 230 in the longitudinal direction.

With this configuration, the wheel 310 and the wheel motor MW may be accommodated on the other side of the lower leg 230 in the longitudinal direction, and the wheel 310 may be rotatably coupled to the lower leg 230.

Meanwhile, a sensor capable of measuring a distance from the ground may be provided on the other side of the lower leg 230 in the longitudinal direction. Specifically, a cliff sensor 670 may be disposed on the lower leg 230. For example, a first cliff sensor 671 may be disposed on a front lower end of the lower leg 230, and a second cliff sensor 672 may be disposed on a rear upper side of the lower leg 230. With this configuration, distances between the lower leg 230 and the wheel 310 and the ground B may be measured. Additionally, an angle between the lower leg 230 and the ground may be calculated through a distance difference between the first cliff sensor 671 and the second cliff sensor 672.

Meanwhile, although not shown, the leg unit 200 may be provided with a stopper. The stopper may be disposed inside the body housing 110. The stopper may be disposed adjacent to a rotational coupling unit 410 of the arm 400. For example, the stopper may be disposed on an inner surface of the rotational coupling unit 410 formed in a cylindrical shape.

For example, the stopper may be disposed on the leg support (not shown). As another example, the stopper may be disposed on the first link.

The stopper may be formed to protrude toward the rotational coupling unit 410. The stopper may be supported in contact with a rotational protrusion (not shown) of the arm 400, which will be described below. For example, the rotational protrusion protruding from the inner surface of the rotational coupling unit 410 may rotate together with the rotation of the arm 400 and may be in contact with the stopper when the arm 400 rotates to a predetermined position.

With this configuration, the stopper may limit the rotational angle of the arm 400 when rotating.

Describing the overall balance achieved by the leg unit 200, the first link and the second link are rotatably coupled to a link frame (not shown) provided inside the robot body 100, and the first link and the second link are coupled to the lower leg 230. That is, the robot 1 has a structure that supports the robot body 100 through a four-section link composed of the link frame (not shown), the first link, the second link, and the lower leg 230.

In addition, the leg unit 200 generates a restoring force in a direction in which the gravity compensator lifts the robot body 100. Accordingly, even in a state in which the suspension motor MS is not driven, the pair of leg units 200 may maintain the state of lifting the robot body 100 to a predetermined height from the ground.

Meanwhile, the robot 1 according to the embodiment of the present invention may maintain the balance by lifting one of the pair of wheels 310 to pass over an obstacle or driving the suspension motor MS when the height of the robot body 100 is lowered for charging or the like.

When the suspension motor MS is driven, the first link rotates about a motor coupling portion, thereby causing a link coupling portion to move upward. In addition, the lower leg 230 moves according to the rotation of the first link. In addition, the second link is rotated by being pushed by the lower leg 230. Consequently, one end portion of the lower leg 230 may move rearward, and the other end portion of the lower leg 230 may move upward.

With this configuration, even when the wheel 310 moves upward and downward, a movement range of the wheel 310 in the front-rear direction may be limited. Accordingly, the robot 1 can stably maintain the balance.

Accordingly, the robot 1 according to the present invention may pass obstacles of various heights using the four-bar linkage.

### Wheel unit

The leg unit 300 of the robot 1 according to one embodiment of the present invention will be described with reference to FIGS. 1 to 8 as follows.

The wheel unit 300 may be rotatably coupled to the leg unit 200 and may roll along the ground to move the robot body 100 and the leg unit 200.

The wheel unit 300 includes the wheel 310 that rolls along the ground while being in contact with the ground.

The wheel 310 is provided to have a predetermined radius and a predetermined width in an axial direction. In a front view of the robot 1, at least a portion of the robot body 100 and the leg unit 200 may be disposed vertically above the wheel 310.

Although not shown, the wheel 310 may include the wheel frame formed in a circular shape. The wheel frame may be formed in a cylindrical shape with one open side facing the shaft of the wheel motor MW. Accordingly, the weight of the wheel frame can be reduced.

However, when the wheel frame is formed in a cylindrical shape, the overall rigidity of the wheel frame can be reduced. Considering this, a rib (not shown) for reinforcing rigidity may be formed on each of inner and outer surfaces of the wheel frame.

A tire is coupled to the outer surface of the wheel frame. The tire may be formed in an annular shape having a diameter that may be inserted into the outer surface of the wheel frame.

Grooves with a predetermined pattern may be formed by recessing an outer surface of the tire in order to improve tire grip.

In one embodiment, the tire may be formed of an elastic rubber material.

The wheel motor MW may provide a driving force to the wheel 310. The wheel motor MW may generate a rotational force by receiving power from the battery 800.

The wheel motor MW may be accommodated inside the other side of the lower leg 230. In addition, the shaft of the wheel motor MW may be coupled to the wheel 310. That is, the wheel motor MW may be an in-wheel motor.

With this configuration, when the wheel motor MW is driven, the wheel 310 may roll along the ground while rotating, and the robot 1 may move along the ground.

### Arm

The arm 400 of the robot 1 according to one embodiment of the present invention will be described with reference to FIGS. 1 to 7 as follows.

The arm 400 may be pivotally coupled to both side surfaces of the robot body 100. For example, the arm 400 may refer to a rotating body that is coupled to both end portions of the ellipsoidal robot body 100 in the axial direction (the longitudinal direction) and rotates about both end portions of the robot body 100 in the axial direction.

Specifically, the arm 400 includes the rotational coupling unit 410 and a connector 420.

The rotational coupling unit 410 may be rotatably coupled to both side surfaces of the robot body 100. The rotational coupling unit 410 may be provided as a pair of rotational coupling units and coupled to be rotatable relatively with respect to both left and right sides of the robot body 100. In this case, the pair of rotational coupling units 410 may rotate in conjunction with each other. That is, the pair of rotational coupling units 410 may rotate simultaneously, and rotational angles thereof may be the same. However, when viewed from the robot body 100, rotational directions of the pair of rotational coupling units 410 may be opposite. That is, when viewed from the robot body 100, when the rotational coupling unit 410 on one side rotates clockwise, the rotational coupling unit 410 on the other side may rotate counterclockwise.

The rotational coupling unit 410 may be formed in a shape that may cover both left and right end portions of the robot body 100. For example, the rotational coupling unit 410 may be formed in a cylindrical shape with a predetermined thickness. In this case, both left and right end portions of the robot body 100 may be disposed to face the center of the rotation of the rotational coupling unit 410.

That is, in the description of a state in which the rotational coupling unit 410 is coupled to the robot body 100, assuming that the robot body 100 is a human face, the rotational coupling unit 410 may have a shape similar to a pair of earplugs or earpieces of a headphone.

An arm motor MA may be disposed inside the body housing 110. Alternatively, according to an embodiment, the arm motor MA may be disposed inside the rotational coupling unit.

The arm motor MA may be connected to the arm 400 to provide a driving force to the arm 400. More specifically, the shaft of the arm motor MA or a final output stage of a gear is connected to the rotational coupling unit 410. For example, the shaft of the arm motor MA may be connected to a reducer, and the reducer may be connected to a driven gear.

The reducer may be composed of at least one gear and may transmit the rotational force applied from the arm motor MA to the driven gear, and a rotational speed of the driven gear may be reduced through a gear ratio. Accordingly, precise rotation of the arm 400 may be controlled, and the arm 400 may provide a relatively large force.

The driven gear may be coupled to the rotational coupling unit 410 and rotated integrally. The driven gear may be engaged with an output end of the reducer to receive the rotational power of the arm motor MA.

With this configuration, when the arm motor MA is operated, the rotational coupling unit 410 may be rotated.

The arm motor MA may be provided as two arm motors, each of which may be connected to one of the pair of rotational coupling units 410. As another example, the arm motor MA may be provided as one arm motor and connected to one of the rotational coupling units 410.

With this configuration, when the arm motor MA is operated, the pair of rotational coupling units 410 are rotated together in conjunction therewith, and the connector 420 is rotated together according to the rotation of the rotational coupling units 410. That is, according to the present invention, the rotational coupling units 410 and the connector 420 of the arm 400 may be rotated integrally using the arm shaft of the rotational coupling unit 410 as a rotational axis.

Meanwhile, a speaker 450 may be disposed outside the rotational coupling unit 410. That is, the speaker 450 may be disposed on each of the pair of rotational coupling units 410 in a direction opposite to the direction in which the robot body 100 is disposed. Accordingly, the speakers 450 may be respectively disposed at positions covering both sides of the body housing 110 in the left-right direction.

The speaker 450 may transmit information on the robot 1 as sound. The source of the sound transmitted by the speaker 450 may be sound data previously stored in the robot 1. For example, the pre-stored sound data may be voice data of the robot 1. For example, the pre-stored sound data may be a notification sound that guides the state of the robot 1. Meanwhile, the source of the sound transmitted by the speaker 450 may be sound data received through a communication unit 710.

Meanwhile, in the case of the conventional robots, a pair of arms may be provided on both sides of a main body similar to a human arm to move an object or perform a specific task.

However, when the pair of arms are provided as described above, each arm may move separately, and thus loads applied to both sides of the robot may vary. Accordingly, a problem that the robot tilts to one side and topples over may occur.

In addition, in a state in which the robot topples over, the arm may attempt to stand up by pressing the ground, but since the arms at both sides rotate separately to press the ground, there is a limitation that the robot may lose its balance during the process of standing up and re-topple over.

Meanwhile, in the case of a robot that transports an object or performs a specific task through one arm, there is a limitation that the load of the object being transported or an impact that may occur during the task may be concentrated on only one arm, causing damage to the arm.

In order to solve this problem, the robot 1 according to the embodiment of the present invention is configured such that one arm 400 is rotatably coupled to both sides of the robot body 100.

The connector 420 may connect the pair of rotational coupling units 410. The connector 420 may connect the pair of rotational coupling units 410 covering both sides of the robot body 100 in the left-right direction so as to rotate together.

The connector 420 may connect the pair of rotational coupling units 410 and rotate about the robot body 100. Specifically, the connector 420 may be formed in a frame shape in which both end portions in the longitudinal direction are bent and extended. In this case, both end portions of the connector 420 bent and extended may be disposed in parallel and connected to the pair of rotational coupling units 410. For example, the connector 420 may be formed in a "∩" shape. As another example, the connector 420 may be formed in an arch shape.

In the description of the arm 400 coupled to the robot body 100, assuming that the robot body 100 is a human face, the connector 420 may have a shape similar to a hair band of a headphone. That is, assuming that the robot body 100 is a human face, the arm 400 may appear in a shape similar to a headphone.

With this configuration, the pair of rotational coupling units 410 may be integrally connected to the connector 420 so that the entire arm 400 may rotate about the rotational coupling unit 410 together.

Meanwhile, a rotational radius of the arm 400 may be larger than the maximum length of the first link and smaller than the maximum length of the leg unit 200. Specifically, the shortest distance from the center of the rotation of the rotational coupling unit 410 to an outer end portion of the connector 420 may be larger than the maximum length of the first link and smaller than the maximum length of the leg unit 200.

With this configuration, when the arm 400 rotates, at least a portion of the arm 400 may be disposed closer to the ground than the first link.

When no special user instruction or preset situation occurs, the outer end portion of the arm 400 may be disposed farther from the ground than the robot body 100. With this configuration, the user can easily carry the robot 1 by holding the arm 400. That is, the arm 400 may serve as a handle that the user may hold.

In addition, when no special user instruction or preset situation occurs, the arm 400 may be disposed behind the robot mask 500. This is to prevent the robot mask 500 from being obscured by the arm 400 when the user looks at the robot 1.

Meanwhile, when a special user instruction or preset situation occurs, the arm 400 may perform various functions during rotation.

For example, the robot 1 may perform a scooch down attitude. To this end, the robot 1 may rotate the arm 400 from an upper side of the robot body 100 to a lower rear side of the robot body 100 via a rear side thereof. At the same time or prior to the rotation of the arm 400, the leg unit 200 may be moved to lower the attitude of the robot 1. Accordingly, even when the operation of the wheel motor MW is stopped and the wheel 310 does not rotate, the robot 1 may tilt rearward to bring the pair of wheels 310 and the lower end portion of the arm 400 into contact with the ground. Consequently, through the operation of the robot 1, one arm 400 and one pair of wheels 310 may be in contact with the ground, and the robot body 100 may be supported at three points. Accordingly, a standby attitude for reducing power consumption may be assumed.

As another example, the robot 1 may stand up from a toppled state by pressing the ground with the arm 400. To this end, the robot 1 may rotate the arm 400 forward from the robot body 100, and simultaneously, the wheels 310 may be rotated in a direction in which the robot 1 moves forward. That is, the pair of wheels 310 may be rotated in a direction closer to the arm 400. Consequently, according to the robot 1 of the present invention, since the robot 1 may stand up by pressing the ground with one arm, it is possible to prevent the robot 1 from shaking or re-topple over during the stand-up process and minimize the power consumed during the stand-up operation.

Meanwhile, according to an embodiment, the arm 400 of the robot 1 may further include a detachable unit 430 to be coupled to the functional module 900.

The detachable unit 430 may be disposed on the connector 420. Specifically, the detachable unit 430 may be disposed on an outer surface of the connector 420. Here, the outer surface of the connector 420 may be a surface disposed in a direction opposite to a direction in which the connector 420 faces the robot body 100.

With this configuration, the detachable unit 430 may be exposed to the outside centered on the robot body 100 to facilitate contact with an object entering from the outside of the robot 1.

The detachable unit 430 may be detachably coupled to the functional module 900. Specifically, the detachable unit 430 may be selectively coupled to or separated from the functional module 900.

The detachable unit 430 may be formed as an electromagnet and may selectively apply a magnetic force (attractive force) to the functional module 900 depending on whether power is supplied.

For example, the detachable unit 430 may be formed as an electromagnet. With this configuration, the detachable unit 430 may generate a uniform magnetic field over a wide region and can be stably coupled to the functional module 900.

### Robot mask

The robot 1 according to one embodiment of the present invention may further include the robot mask 500.

The robot mask 500 may be detachably coupled to the robot body 100 and may cover the display 120. The robot mask 500 may be coupled to the robot body 100 to form the exterior of the robot 1.

The robot mask 500 includes a mask body 510 and a window 550.

The mask body 510 forms an exterior of the robot mask 500. For example, based on a state in which the robot mask 500 and the robot body 100 are coupled, an externally exposed outer surface of the mask body 510 may be formed as a curved surface with a predetermined curvature.

In addition, an inner surface of the mask body 510 that faces the robot body 100 may be formed to correspond to the shape of the robot body 100. For example, the inner surface of the mask body 510 may be formed in a flat surface shape corresponding to the shape of the display 120, and the outer surface thereof may have a side wall protruding to accommodate a portion of the body housing 110. Accordingly, the inner surface of the mask body 510 may be formed of an oval-shaped flat surface and a side wall surrounding the flat surface.

Although not shown, the mask body 510 may be provided with a magnet for coupling.

For example, at least one magnet may be disposed on the side wall protruding from the inner surface of the mask body 510.

In addition, the magnet generates a magnetic force (attractive force) and is detachably coupled to the robot body 100. With this configuration, the magnet may couple the body housing 110 to the mask body 510 with the magnetic force, and when a user applies an external force greater than a predetermined magnitude, the body housing 110 and the mask body 510 may be separated.

Although not shown, a mask communication unit may be disposed on the mask body 510 and may communicate with the communication unit 710 provided on the robot body 100.

The communication unit of the robot mask 500 may support wireless communication with the robot body 100. A short-range communication module may be provided as a wireless communication module to support wireless communication.

The short-range communication may be, for example, near field communication (NFC) or the like.

Information on the shape of the robot mask 500 and the functions provided in the robot mask 500 may be transmitted to the robot body 100 via the communication unit of the robot mask 500. In addition, the communication unit of the robot mask 500 may receive control instructions from the controller 700 provided in the robot body 100.

Meanwhile, the robot mask 500 may receive power from the robot body 100. Although not shown, the robot mask 500 may be provided with a terminal that may be electrically connected to the robot body 100.

Meanwhile, when coupled to the robot body 100, the robot mask 500 according to one embodiment of the present invention may include the window 550 that exposes an image displayed on the display 120 to the outside.

The window 550 may be disposed on the mask body 510. Specifically, the window 550 may be disposed to pass through the mask body 510 and disposed at a position facing the display 120 when the robot mask 500 is coupled to the robot body 100.

The window 550 may be formed of a material that may transmit light. For example, the window 550 may be formed of a transparent material.

Meanwhile, when the robot mask 500 is coupled to the robot body 100, a face and expression may be displayed on the display 120.

The robot 1 may display facial shapes, such as eyes, nose, mouth, and the like, on the display 120 to make the user feel the robot expressing emotions.

The robot 1 may depict facial expressions by displaying a preset image on the display 120, thereby allowing the user to recognize the robot expressing emotions.

For example, when the user returns home, the robot 1 may display a smiling face on the display 120 to show happiness.

As another example, when the robot 1 detects a cliff and escapes the danger of falling, the robot 1 may display a surprised face and surprised eye expression on the display 120.

As still another example, when the user calls the robot 1, the robot 1 may stare at the user and display a curious facial expression on the display 120. The robot 1 may be set to detect and respond when the user calls with a specific pronunciation.

As yet another example, when the robot 1 cannot understand the user instruction, the robot 1 may display a curious facial expression together with a symbol, such as '?' or the like, on the display 120.

As yet another example, when the user continuously instructs services to the robot 1, the robot 1 may display a difficult facial expression together with a picture representing sweat.

As yet another example, when the user does not instruct the robot 1 for a preset time or longer, the robot 1 may display a sleeping facial expression.

In addition to the above examples, the robot 1 may express various emotions on the display 120, and expressions that may be displayed can be improved or added through software update or the like.

In this way, the robot 1 may provide a pet robot service that expresses emotions and communicates with the user and provide emotional stability to the user.

As described above, the robot 1 may visually express emotions by displaying facial expressions on the display 120 and also express emotions through a voice output of the speaker 450.

For example, a laughing sound, a surprised sound, and the like may be output in response to the facial expression displayed on the display 120.

In addition, the robot 1 may visually express emotions by displaying facial expressions on the display 120 as described above and also express emotions by rotating the arm 400.

For example, the robot may display a smiling expression on the display 120 and shake the arm 400 to express emotions.

Meanwhile, the display 120 may change a shape displayed in a state in which the robot mask 500 is coupled depending on the shape of the robot mask 500.

Specifically, the controller 700 of the robot 1 may receive information on the shape of the mask 500 via a mask communication unit 530. For example, each robot mask 500 may have shape information recorded therein, and the controller 700 may receive information on the shape of the robot mask 500 from the mask communication unit 530 of the robot mask 500. In this case, a memory 720 stores graphical user interface (GUI) information (hereinafter referred to as "GUI") depending on the shape of each mask 500. In addition, the controller 700 may control the display 120a to display a GUI corresponding to the shape of the robot mask 500. Accordingly, in a state in which the robot mask 500 and the robot body 100 are coupled, the display 120 may display the GUI, and the GUI displayed on the display 120 may be viewed from the outside of the robot mask 500 through the window 550.

Meanwhile, the user may directly select a GUI through the input unit 125. In addition, the controller 700 may control the display 120 to display the GUI input by the user.

With this configuration, the user may purchase the robot mask 500 according to his or her taste or select his or her preferred GUI to customize the exterior of the robot 1.

### Functional module

The robot 1 of the present invention includes the functional module 900. The functional module 900 is a component that is coupled to the lower side of the robot body 100 and provides various functions to the robot 1.

The functional module 900 is detachably coupled to the robot body 100. For example, the functional module 900 may be detachably coupled to the lower portion of the robot body 100. Specifically, the functional module 900 may be coupled to the module coupling unit 150 disposed on the lower portion of the robot body 100.

In particular, the robot 1 of the present invention is a two-wheeled robot, and since a space in which the functional module 900 will be coupled is formed between the pair of wheels 310 and the leg unit 200, there is an advantage that the overall volume does not significantly increase even in a state in which the robot body 100 and the functional module 900 are coupled.

In addition, with this arrangement, when the functional module 900 is coupled to the robot body 100, not only the pair of wheels 310 but also the functional module 900 may be in contact with the ground B, and the number of contact points and the supported area between the ground B and the robot 1 can be increased. Accordingly, the functional module 900 of the present invention may be coupled to the robot body 100, thereby easily maintaining the balance of the robot 1.

Although not shown, the functional module 900 may have a structure corresponding to the module coupling unit 150 of the robot body 100. For example, the functional module 900 may have the coupling unit 930 that is detachably coupled to the module coupling unit 150 of the robot body 100. In addition, the functional module 900 may have a corresponding terminal corresponding to the terminal of the robot body 100. The corresponding terminal may be in contact with the terminal of the robot body 100 to receive power from the robot body 100 and may transmit and receive electrical signals to and from the robot body 100.

Although not shown, the functional module 900 may have a lamp. The lamp may notify the position of the functional module 900 through light emission. For example, the lamp may be an infrared (IR) light emitting diode (LED). With this configuration, the IR sensor 620 disposed on the robot body 100 may detect the position of the functional module 900, and the robot body 100 may travel toward the functional module 900.

The functional module 900 may include various components depending on its function.

When different functional modules 900 are provided, the user may add or change services provided by the robot 1 according to the present invention by replacing the functional module 900 as needed.

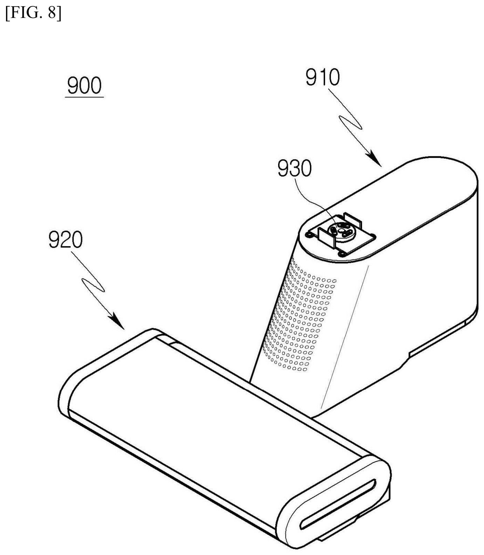

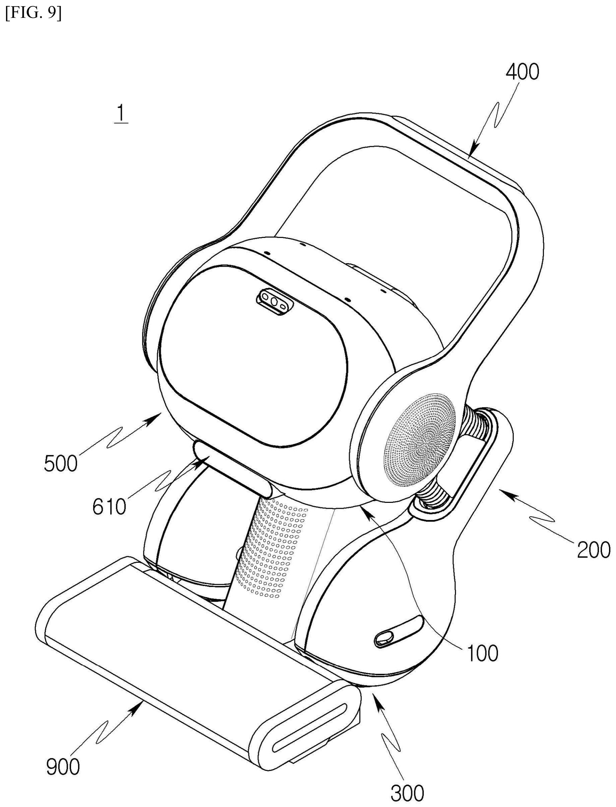

As shown in FIGS. 8 and 9, the functional module 900 may be a cleaning module.

The functional module 900 includes a module body 910, a suction nozzle 920, and the coupling unit 930. With this configuration, when the functional module 900 is coupled to the robot body 100, the robot 1 may perform dry cleaning.

The module body 910 may be detachably coupled to the robot body 100 through the coupling unit 930. Although not shown, the module body 910 may have a path capable of suctioning dust formed therein.

The suction nozzle 920 capable of suctioning dust may be provided at the front of the module body 910. In addition, a dust bin capable of storing the suctioned dust may be disposed inside the module body 910. A motor (not shown) for providing air suction power may be provided inside the module body 910. In this case, a wheel may be provided on a bottom surface of the module body 910.

The suction nozzle 920 may suction air and dust while moving along the ground (floor). A suction port may be formed on a bottom surface of the suction nozzle 920. In addition, an agitator may be provided near the suction port. In addition, a motor for providing a driving force to the agitator and/or the wheels may be further provided inside the module body 910.

The coupling unit 930 is disposed on an upper portion of the module body 910 and coupled to the robot body 100. Specifically, the coupling unit 930 may be disposed on the upper front side of the module body 910. The coupling unit 930 may be detachably coupled to the module coupling unit 150 of the module body 910. For example, the coupling unit 930 may include at least a portion formed of a metal material or an electromagnet. As another example, the coupling unit 930 may be hook-coupled to the module body 910 by including a hook or the like. In this case, coupling strength between the module body 910 and the robot body 100 can be increased.

Meanwhile, in the present embodiment, the functional module 900 may be coupled to the lower portion of the robot body 100. The robot body 100 may be disposed above the functional module 900 and may move together with the functional module 900. The functional module 900 may change a traveling direction depending on the movement of the robot body 100. This may make it appear to the user that the robot body 100 is climbing onto the functional module 900 and cleaning.

Meanwhile, the functional module 900 may be formed to have the rear heavier than the front at which the suction nozzle 920 is disposed with respect to the coupling unit 930. Although not shown, a motor relatively heavier than other components may be disposed on an inner rear side of the module body 910. In addition, although not shown, in the present embodiment, a weight that increases the weight of the functional module 900 may be further disposed on the inner rear side of the module body 910.

Accordingly, the functional module 900 may be coupled to the robot body 100 and lifted together with the robot body 100 when the robot body 100 moves upward.

When the functional module 900 is lifted by the robot body 100, a front end of the functional module 900 may be lifted higher than a rear end thereof.

Although not shown, the functional module 900 may be a transport module including a support plate capable of supporting an object and transport wheels coupled to a lower side of the support plate and capable of rolling along the ground. Alternatively, the functional module 900 may be a wet mop module including a pair of mops rotating about a rotational axis and a water tank storing water supplied to the mops. Alternatively, the functional module 900 may include an arm and a gripper.

### Control configuration

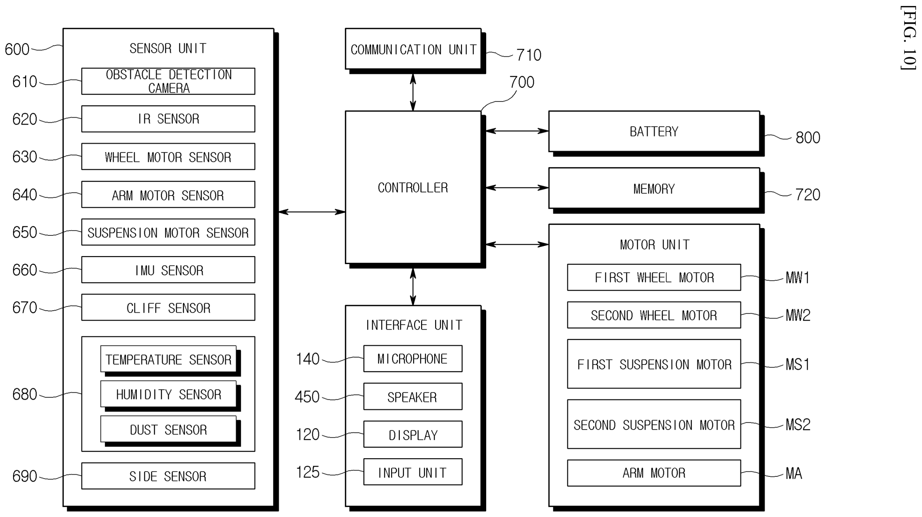

FIG. 10 is a block diagram for describing a control configuration of the robot according to one embodiment of the present invention.

Referring to FIGS. 1 to 10, the robot 1 according to the embodiment of the present invention may include a sensor unit 600, the controller 700, the communication unit 710, the memory 720, the battery 800, a motor unit, and an interface unit.

Since components shown in the block diagram of FIG. 10 are not essential in implementing the robot 1, the robot 1 described herein may have a larger or fewer number of components than the components listed above.

First, the controller 700 may control the overall operation of the robot 1. The controller 700 may control the robot 1 to perform various functions according to setting information stored in the memory 720 to be described below.

The controller 700 may be disposed on the robot body 100. More specifically, the controller 700 may be mounted on a printed circuit board (PCB) disposed inside the body housing 110.

The controller 700 may include all types of devices capable of processing data, such as a processor. Here, the term "processor" may be, for example, a data processing device built into hardware, which has a physically structured circuit to perform a function expressed by code or commands included in a program. As an example of the data processing device built into hardware, processing devices such as a microprocessor, a central processing unit (CPU), a processor core, a multiprocessor, an application-specific integrated circuit (ASIC), and a field programmable gate array (FPGA) may be included, but the scope of the present invention is limited thereto.

The controller 700 may receive information on an external environment of the robot 1 from at least one component of the sensor unit 600 to be described below. In this case, the information on the external environment may be, for example, information such as a temperature, humidity, dust level, and the like of an indoor space where the robot 1 travels. Alternatively, the information may be, for example, cliff information. Alternatively, the information may be, for example, indoor map information. Of course, the information on the external environment is not limited to the above examples.

The controller 700 may receive information on a current status of the robot 1 from at least one component of the sensor unit 600 to be described below. In this case, the current status may be, for example, tilt information of the robot body 100. Alternatively, the current status may be, for example, information on a separation state between the wheels 310 and the ground. Alternatively, the current status may be, for example, position information of the wheel motor MW. Alternatively, the current status may be, for example, position information of the suspension motor MS. Of course, information on the current status of the robot 1 is not limited to the above examples.

The controller 700 may transmit a driving control instruction to at least one of components of the motor unit to be described below. For example, the rotation of the wheel motor MW may be controlled for the traveling of the robot 1. Alternatively, for example, the rotation of the wheel motor MW may be controlled to maintain the horizontal attitude of the robot 1. Alternatively, for example, the rotation of the suspension motor MS may be controlled to maintain the horizontal attitude of the robot 1.

The controller 700 may receive a user instruction through at least one of components of the interface unit to be described below. For example, the instruction may include turning the robot 1 on or off. Alternatively, for example, the instruction may be to manually control various functions of the robot 1.

The controller 700 may output information on the robot 1 through at least one of the components of the interface unit to be described below. For example, the output information may be visual information. Alternatively, for example, the output information may be auditory information.

The motor unit may include at least one motor and provide a driving force to a component connected to each motor.

The motor unit may include the wheel motor MW for providing a driving force to the left and right wheels 310. More specifically, the motor unit may include a first wheel motor MW1 that transmits a driving force to the wheel 310 disposed on one side in the left-right direction and a second wheel motor MW2 that transmits a driving force to the wheel 310 disposed on the other side in the left-and right direction.

The wheel motors MW may be disposed in the wheel units 300, respectively. More specifically, the wheel motor MW may be accommodated inside the lower leg 230. Alternatively, the wheel motor MW may be accommodated inside the wheel 310.

The wheel motor MW is connected to the wheel 310. More specifically, a shaft of the first wheel motor MW1 or the final output stage of the gear is connected to the wheel 310 disposed on one side in the left-right direction. A shaft of the second wheel motor MW2 or the final output stage of the gear is connected to the wheel 310 disposed on the other side in the left-right direction. Each of the left and right wheel motors MW is rotatably driven according to the control instruction of the controller 700, and the robot 1 travels along the ground due to the rotation of the wheel 310 according to the rotation of the wheel motor MW.

The motor unit may include the suspension motor MS for providing a driving force to the left and right leg units 200. More specifically, the motor unit may include a first suspension motor MS1 that transmits a driving force to the leg unit 200 disposed on one side in the left-right direction and a second suspension motor MS2 that transmits a driving force to the leg unit 200 disposed on the other side in the left-right direction.

The suspension motor MS may be disposed on the robot body 100. More specifically, the suspension motor MS may be disposed inside the body housing 110.

The suspension motor MS is connected to the first link. More specifically, a shaft of the first suspension motor MS1 or the final output stage of the gear is connected to the first link on one side in the left-right direction. A shaft of the second suspension motor MS2 or the final output stage of the gear is connected to the first link on the other side in the left-right direction. Each of the left and right suspension motors MS may be rotatably driven according to the control instruction of the controller 700, and the first link may rotate according to the rotation of the suspension motor MS, and the lower leg 230 connected to the first link may rotate, resulting in a change in angle between the first link 210 and the third link 230.

Accordingly, the robot 1 may lift or lower the wheel 310 and maintain a horizontal attitude when climbing over an obstacle or traveling along a curved ground. Alternatively, the robot body 100 may move downward or upward.

The motor unit may include the arm motor MA for providing a rotational force to the arm 400.

The arm motor MA may be disposed on the robot body 100. More specifically, at least one arm motor MA may be disposed inside the body housing 110.

The arm motor MA may be rotatably driven according to the control instruction of the controller 700, and the rotation coupling unit 410 may rotate according to the rotation of the arm motor MA and the connector 420 formed integrally with the rotation coupling unit 410 may rotate, resulting in pivotal movement of the arm 400 with respect to the robot body 100.

Accordingly, the robot 1 may rotate the arm 400 and may be coupled to the functional module 900 by rotating the arm 400. Alternatively, the robot 1 may rotate the arm 400 so that the arm 400 may press against the ground.

The sensor unit 600 may include at least one sensor, and each sensor may measure or detect information about an external environment of the robot 1 and/or information about a current state of the robot 1.

The sensor unit 600 may include the obstacle detection camera 610.

The obstacle detection camera 610 is provided to detect an obstacle T present in the indoor space in which the robot 1 travels and map the structure of the indoor space.

To this end, the obstacle detection camera 610 may be disposed at the front of the robot body 100. More specifically, the obstacle detection camera 610 may be disposed at the front of the body housing 110.

Meanwhile, in the present embodiment, the obstacle detection camera 610 may be disposed as a plurality of obstacle detection cameras. For example, a first detection camera 611 may be disposed on the front lower portion of the body housing 110, and the second detection camera 612 may be disposed on the front upper portion of the body housing 110. With this configuration, the obstacle detection camera 610 may detect objects or people disposed in front of the robot 1.

The obstacle detection camera 610 may detect the obstacle T and a distance to the obstacle T. For example, the first detection camera 611 may be a depth camera.

The obstacle detection camera 610 may capture an image of the indoor space during driving to perform simultaneous localization and mapping (SLAM). For example, the second detection camera 612 may be an RGB camera.

The depth camera and the RGB camera may calculate a distance by irradiating light and calculating the time it takes for reflected light to return.

The controller 700 may detect the obstacle T and implement SLAM based on information on an image of the surrounding environment captured by the obstacle detection camera 610 and information on a current position of the robot 1.

Meanwhile, a method in which the robot 1 according to the embodiment of the present invention implements SLAM may be a method implemented using only the obstacle detection camera 610, but is not limited thereto. For example, the robot 1 may implement the SLAM also using an additional sensor. The additional sensor may be, for example, a laser distance sensor (LDS).

The sensor unit 600 may include the IR sensor 620 for detecting infrared rays.

The IR sensor 620 may be an IR camera for detecting infrared rays.

The IR sensor 620 may be disposed on the robot body 100. In an embodiment of the present invention, the IR sensor 620 may be disposed as a plurality of IR sensors. For example, the first IR sensor 621 may be disposed on the front lower portion of the body housing 110, and the second IR sensor 622 may be disposed at the rear of the body housing 110. With this configuration, the IR sensor 620 may detect positions of light sources disposed in various directions.

The IR sensor 620 may be disposed close to the obstacle detection camera 610. For example, the first IR sensor 621 may be disposed directly below the first obstacle detection camera 611.

With this arrangement, the IR sensor 620 may detect light emitted by a lamp of the functional module 900 or the robot charging stand (not shown), and when the robot body 100 enters the lamp, the obstacle detection camera 610 may detect the shape of the functional module 900 or the robot charging stand (not shown).

The IR sensor 620 may detect infrared rays emitted by an IR LED provided on a specific module and enter the module. For example, the module may be a charging stand for charging the robot 1. For example, the module may be the functional module 900 detachably provided on the robot body 100.

The controller 700 may control the IR sensor 620 to start detecting the IR LED when a charging state of the robot 1 is a preset level or less. The controller 700 may control the IR sensor 620 to start detecting the IR LED when receiving a user instruction to find a specific module.

The sensor unit 600 may include a wheel motor sensor 630.

The wheel motor sensor 630 may measure a position of the wheel motor MW. For example, the wheel motor sensor 630 may be an encoder. As is well known, the encoder may detect a position of the motor and also detect a rotational speed of the motor.

The wheel motor sensor 630 may be disposed on each of the left and right wheel motors MW. More specifically, the wheel motor sensor 630 may be connected to the shaft of the wheel motor MW or the final output stage of the gear and accommodated inside the lower leg 230 together with the wheel motor MW.

The sensor unit 600 may include an arm motor sensor 640.

The arm motor sensor 640 may measure a position of the arm 400. For example, the arm motor sensor 640 may be a photo sensor. As is well known, the photo sensor may measure the degree of rotation of the arm motor MA or the degree of rotation of the arm 400.

The arm motor sensor 640 may be disposed close to the arm motor MA. More specifically, the arm motor sensor 640 may be accommodated inside the body housing 110 or the rotational coupling unit 410 together with the arm motor MA.

The suspension motor sensor 650 may measure a position of the leg unit 200. For example, the suspension motor sensor 650 may be a photo sensor. As is well known, the photo sensor may measure the degree of rotation of the suspension motor MS or the degree of rotation of the upper leg 210.

The suspension motor sensor 650 may be disposed close to the suspension motor MS. More specifically, the suspension motor sensor 650 may be accommodated inside the body housing 110 together with the suspension motor MS.

The sensor unit 600 may include an IMU sensor 660.

The IMU sensor 660 may measure a tilt angle of the robot body 100.

As is well known, the IMU sensor 660 is a sensor in which a 3-axis acceleration sensor, a 3-axis gyro sensor, and a geomagnetic sensor are embedded together and is also referred to as an inertial measurement sensor.

The 3-axis acceleration sensor is a sensor for detecting a gravitational acceleration of an object in a stationary state. Since the gravitational acceleration varies depending on a tilt angle of the object, the tilt angle is obtained by measuring the gravitational acceleration. However, there is a disadvantage that a correct value cannot be obtained in a moving acceleration state rather than a stationary state.

The 3-axis gyro sensor is a sensor for measuring an angular velocity. A tilt angle is obtained by integrating the angular velocity over the entire time. However, continuous errors occur in the angular velocity measured by the gyro sensor due to noise and other reasons, and due to these errors, an error in an integral value accumulatively occurs over time.

Consequently, when a long time elapses in a stationary standby state, the tilt of the robot 1 can be accurately measured by the acceleration sensor, but an error is caused by the gyro sensor. During traveling, an accurate tilt value of the robot 1 may be measured using the gyro sensor, but a correct value cannot be obtained using the acceleration sensor.

The above disadvantages of the acceleration sensor and the gyro sensor may be supplemented using the IMU sensor 660.

In the present specification, hereinafter, an embodiment in which the IMU sensor is provided will be described.

The IMU sensor 660 may be disposed on the robot body 100. More specifically, the IMU sensor 660 may be disposed adjacent to the controller 700. The IMU sensor may be mounted or provided on the PCB inside the robot body 100. In order to increase the accuracy of the measurement of the tilt angle and direction, the IMU sensor is preferably disposed close to a central region of the robot body 100.

The IMU sensor may measure at least one of the 3-axis acceleration, 3-axis angular velocity, and 3-axis geomagnetic data of the robot body 100 and transmit the measured data to the controller 700.

The controller 700 may calculate the tilted direction and angle of the robot body 100 using at least one of the acceleration, angular velocity, and geomagnetic data received from the IMU sensor 660. Based on this, the controller 700 may perform horizontal attitude maintenance control of the robot body 100 to be described below.

The sensor unit 600 may include the cliff sensor 670 for detecting a cliff.

The cliff sensor 670 may detect a distance to the front ground along which the robot 1 travels. The cliff sensor 670 may be formed in various ways within a range in which a relative distance between a point at which the cliff sensor 670 is formed and the ground may be detected.

For example, the cliff sensor 670 may include a light-emitting unit for emitting light and a light-receiving unit on which reflected light is incident. The cliff sensor 670 may be formed as an infrared sensor.

The cliff sensor 670 may be disposed on the lower leg 230. For example, the first cliff sensor 671 may be disposed on the front lower end of the lower leg 230, and the second cliff sensor 672 may be disposed on the rear upper side of the lower leg 230. With this configuration, distances between the lower leg 230 and the wheel 310 and the ground B may be measured. Additionally, the angle between the lower leg 230 and the ground may be calculated through the distance difference between the first cliff sensor 671 and the second cliff sensor 672.

The cliff sensor 670 may irradiate light toward the front ground (floor) of the robot 1. The cliff sensor 670 may detect in advance whether a cliff is present in front of the robot 1 in a proceeding direction.

The light-emitting unit of the cliff sensor 670 may emit light obliquely toward the front ground (floor). The light-receiving unit of the cliff sensor 670 may receive light incident after being reflected from the ground (floor). A distance between the front ground and the cliff sensor 670 may be measured based on a difference between an emission time point and reception time point of light.

When the distance measured by the cliff sensor 670 exceeds a preset value or exceeds a predetermined range, the front ground may be suddenly lowered. With this principle, a cliff may be detected.

When the cliff is detected ahead, the controller 700 may control the wheel motor MW so that the robot 1 travels while avoiding the detected cliff. In this case, the control of the wheel motor MW may be stop control. Alternatively, the control of the wheel motor MW may be change control of a rotational direction.

The sensor unit 600 may include an environmental sensor 680.

The environmental sensor 680 may measure various environmental states outside the robot 1, that is, at home in which the robot 1 travels. The environmental sensor 680 may include at least one of a temperature sensor, a humidity sensor, and a dust sensor.

For example, the environmental sensor 680 may be disposed on the arm 400. More specifically, the environmental sensor 680 may be disposed on the connector 420. As a possible embodiment, information measured by the environmental sensor 680 may be visually displayed on the display 120.

The sensor unit 600 may include a side sensor 690.

The side sensor 690 may measure a distance to an obstacle such as a wall surface or the like.

The side sensor 690 may detect a distance to a wall surface of a side surface on which the robot 1 travels. The side sensor 690 may be formed in various ways within a range in which a relative distance between a point at which the side sensor 690 is disposed and the obstacle may be detected.

For example, the side sensor 690 may include a light-emitting unit for emitting light and a light-receiving unit on which reflected light is incident. The side sensor 690 may be formed as an infrared sensor.

The side sensor 690 may be disposed on both side surfaces of the robot 1. For example, the side sensor 690 may be disposed on the outer surface of the lower leg 230 of the leg unit 200.

The interface unit may include at least one component for interaction between the user and the robot 1, and each component may be provided to receive a user command and/or output information to the user.

The interface unit may include the microphone 140.

The microphone 140 is a component for recognizing the user's voice and may be provided as a plurality of microphones. The microphone 140 may be disposed as a plurality of microphones in the body housing 110. For example, four microphones 140 may be disposed on the upper side of the body housing 110.

An audio signal received by the microphone 140 may be used to track the user's position. In this case, a known sound source tracking algorithm may be applied. For example, the sound source tracking algorithm may be a 3-point measurement method (triangulation method) using a time difference in which the plurality of microphones 140 receive the audio signal. The principle is that a position of the voice source is calculated using positions of each microphone 140 and a speed of a sound wave.

Meanwhile, when the microphone 140 cooperates with the obstacle detection camera 610, the robot 1 may be implemented to find the user's position even when the user calls the robot 1 at a distance.

The interface unit may include the speaker 450.

The speaker 450 may be disposed on the arm 400. For example, the speaker 450 may be disposed on the rotational coupling unit 410 of the arm 400. The speakers 450 may be respectively disposed at positions covering both sides of the body housing 110 in the left-right direction.

The speaker 450 may transmit information on the robot 1 as sound. The source of the sound transmitted by the speaker 450 may be sound data previously stored in the robot 1. For example, the pre-stored sound data may be voice data of the robot 1. For example, the pre-stored sound data may be a notification sound that guides the state of the robot 1. Meanwhile, the source of the sound transmitted by the speaker 450 may be sound data received through the communication unit 710.

The interface unit may include the display 120 and the input unit 125.

The display 120 may include a display disposed in one or more modules. The display 120 may be disposed on the upper front side of the robot body 100.

The display 120 may be formed as one element of an LED, an LCD, a PDP, and an OLED.

The display 120 may display information such as operating time information of the robot 1, battery 800 power information, etc.

The display 120 may display a facial expression of the robot 1. Alternatively, the display 120 may display the pupils of the robot 1. A current status of the robot 1 may be represented by an emotion personified through the shape of the face or the shape of the pupils displayed on the display 120. For example, when the user goes out and returns home, the display 120 may display a smiling facial expression or smiling eye shape. Accordingly, the user may feel the interaction with the robot 1.

The input unit 125 may be configured to receive a control instruction for controlling the robot 1 from the user. For example, the control instruction may be a command for changing various settings of the robot 1. For example, the settings may be voice volume, display brightness, power saving mode settings, etc.

The input unit 125 may be disposed on the display 120.

The input unit 125 generates key input data input by the user to control the operation of the robot 1. To this end, the input unit 125 may be composed of a key pad, a dome switch, a touch pad (static pressure/electrostatic), etc. In particular, when the touch pad forms a layered structure with the first display, which may be referred to as a touch screen.

The communication unit 710 may be provided to transmit signals between internal components of the robot 1. The communication unit 710 may support, for example, controller area network (CAN) communication. The signals may be, for example, control instructions transmitted from the controller 700 to another component.

The communication unit 710 may support wireless communication with other devices present outside the robot 1. A short-range communication module or a long-range communication module may be provided as a wireless communication module for supporting wireless communication.

The short-range communication may be, for example, Bluetooth communication, NFC, etc.

The long-range communication may be, for example, wireless LAN (WLAN), digital living network alliance (DLNA), wireless broadband (Wibro), world interoperability for microwave access (WiMAX), global system for mobile communication (GSM), code division multi access (CMDA), CDMA2000, enhanced voice-data optimized or enhanced voice-data only (EV-DO), wideband CDMA (WCDMA), high speed downlink packet access (HSDPA), high speed uplink packet access (HSUPA), IEEE 802.16, long term evolution (LTE), long term evolution-advanced (LTEA), wireless mobile broadband service (WMBS), Bluetooth low energy (BLE), Zigbee, radio frequency (RF), long range (LoRa), etc.

The memory 720 is a component for storing various data for driving and operating the robot 1.

The memory 720 may store an application program and various data for autonomous driving of the robot 1. The memory 720 may also store data sensed by the sensor unit 600 and setting information for various settings selected or input by the user.

The memory 720 may include magnetic storage media or flash storage media, but the scope of the present invention is not limited thereto. The memory 720 may include an internal memory and/or an external memory and include volatile memories such as a DRAM, an SRAM, or an SDRAM, non-volatile memories such as a one-time programmable ROM (OTPROM), a PROM, an EPROM, an EEPROM, a mask ROM, a flash ROM, a NAND flash memory, or a NOR flash memory, flash drives such as an SSD, a compact flash (CF) card, a SD card, a Micro-SD card, a Mini-SD card, an XD card, or a memory stick, or storage devices such as a HDD.

The memory 720 may be included in the controller 700 or provided as a separate component.

The battery 800 is configured to supply power to other components constituting the robot 1.

The battery 800 may be disposed on the robot body 100. More specifically, the battery 800 may be accommodated inside the body housing 110. Although not shown, the battery 800 may be disposed behind the suspension motor MS.

The battery 800 may be charged by an external power source, and to this end, the charging terminal 130 for charging the battery 800 may be provided on one side of the robot body 100. As in the embodiment of the present invention, the charging terminal 130 may be disposed on a lower portion of the robot body 100. Accordingly, the robot 1 can be easily coupled to the charging stand by entering the charging stand and moving downward so that the charging terminal 130 is seated on the corresponding terminal of the charging stand from above.

### Obstacle passing control

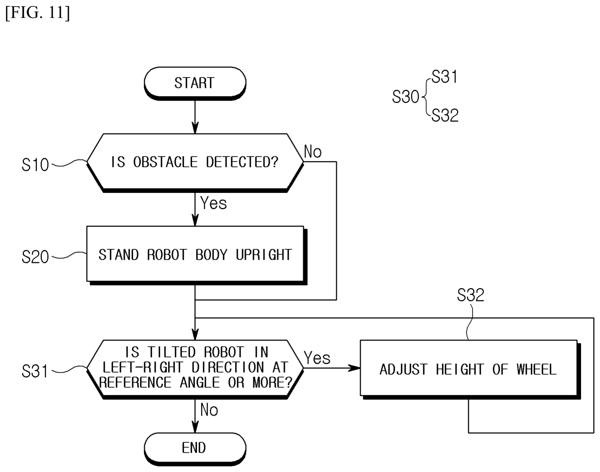

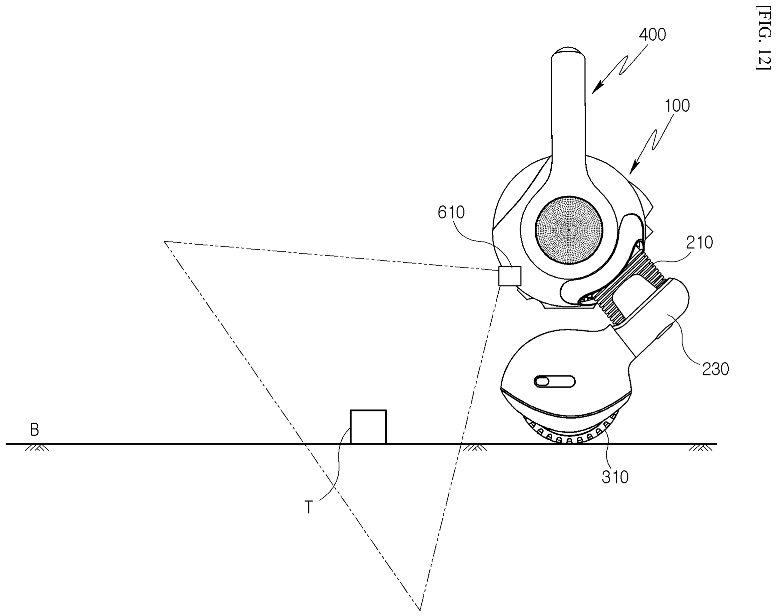

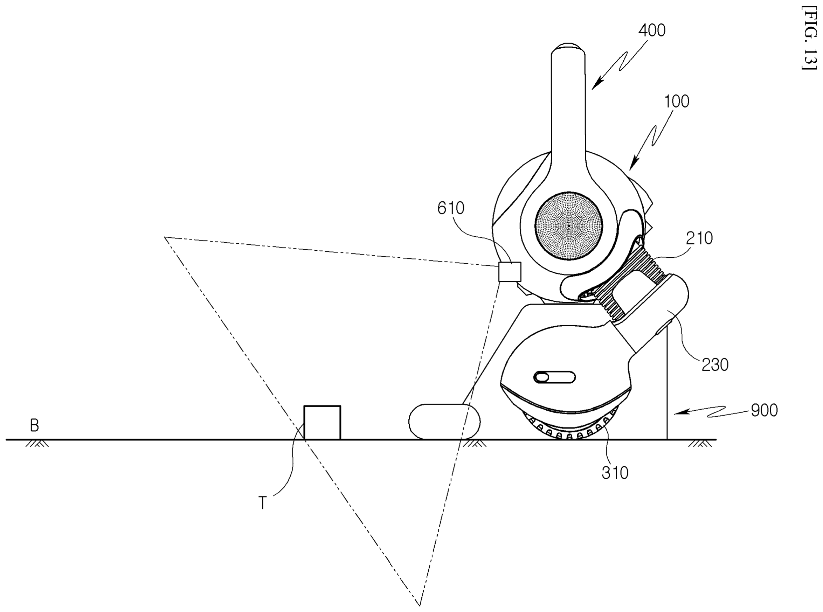

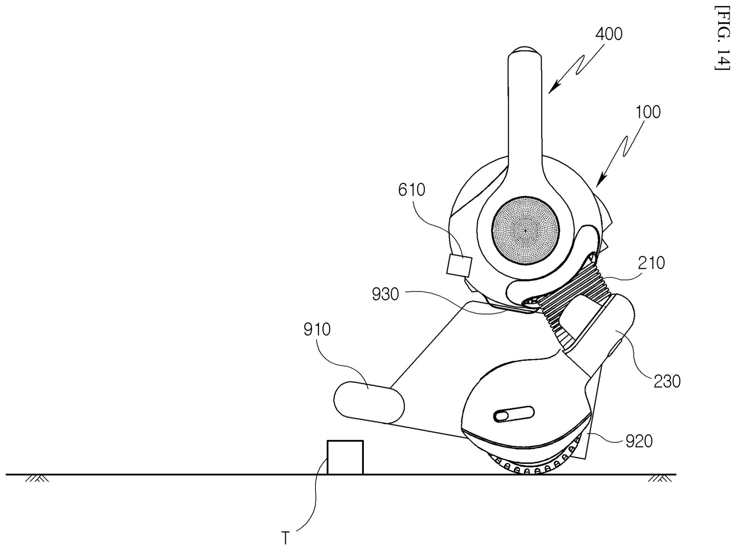

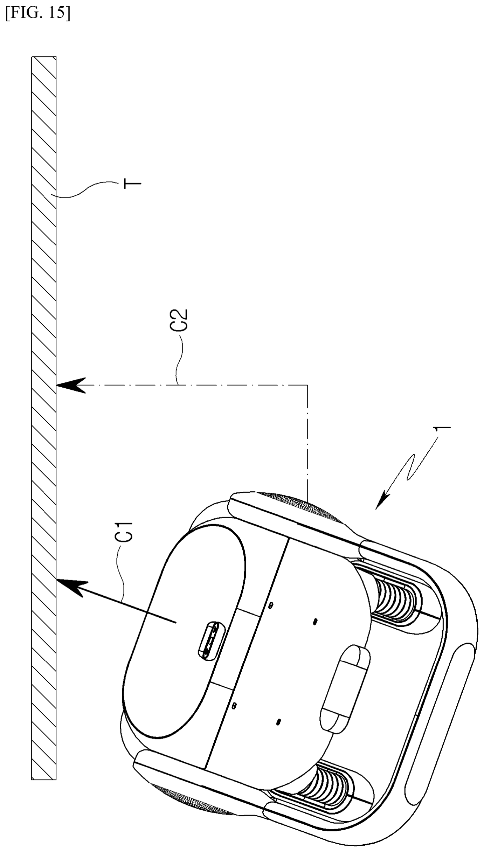

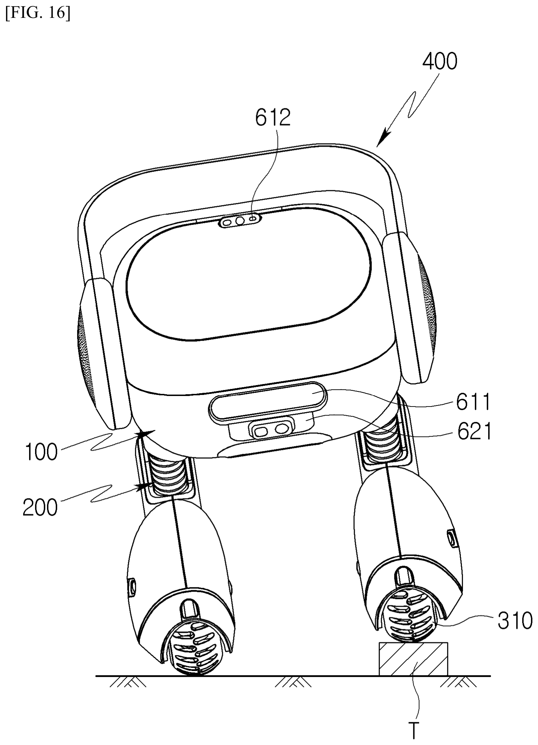

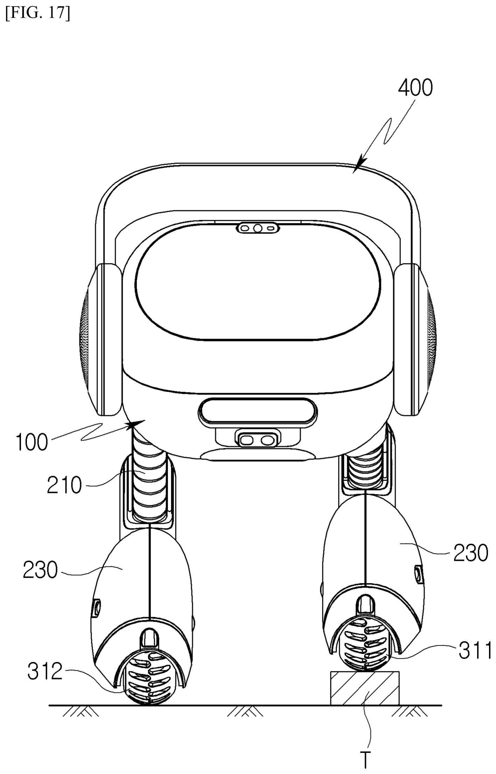

Meanwhile, FIG. 11 is a flowchart for describing a method of controlling a robot according to one embodiment of the present invention, FIG. 12 is a view for describing a situation in which the robot according to one embodiment of the present invention detects an obstacle, FIG. 13 is a view for describing a situation in which the robot according to one embodiment of the present invention detects an obstacle while coupled to the functional module, FIG. 14 is a view for describing a situation in which the robot according to one embodiment of the present invention lifts the functional module to pass over an obstacle while coupled to the functional module, FIG. 15 is a view for describing a situation in which the robot according to one embodiment of the present invention enters an obstacle at an oblique angle, FIG. 16 is a view for describing a situation in which the robot according to one embodiment of the present invention places one wheel on an obstacle, and FIG. 17 is a view for describing the operation of the robot according to one embodiment of the present invention maintaining balance while placing one wheel on the obstacle.

A method of controlling a robot according to an embodiment of the present invention will be described with reference to FIGS. 11 to 17 as follows.

A method of controlling a robot according to one embodiment of the present invention includes an obstacle detecting operation S10, a module lifting operation S20, and a balance maintaining operation S30.

The obstacle detecting operation S10, the module lifting operation S20, and the balance maintaining operation S30 may be performed while the robot 1 rotates the wheels 310 and travels along the ground B.

In the obstacle detecting operation S10, the controller 700 may detect the obstacle T disposed on the ground B. Specifically, in the obstacle detecting operation S10, the obstacle detection camera 610 or the cliff sensor 670 may detect the terrain ahead of the robot 1. That is, the obstacle detection camera 610 or the cliff sensor 670 may detect the distance to a front object to detect a height difference occurring on the ground B. For example, when the obstacle T with a height of 0.5 cm or more is disposed on the ground B, the obstacle detection camera 610 or the cliff sensor 670 may detect the obstacle T and transmit the presence of the obstacle T to the controller 700.

In this case, the controller 700 may detect an angle between the obstacle T disposed on the ground B and the robot 1. That is, in the obstacle detecting operation S10, the controller 700 may draw a virtual line in the forward traveling direction of the robot 1 and calculate the angle between the longitudinal direction of the obstacle T and the forward traveling direction of the robot 1.

In this case, the controller 700 may use the overall shape of the obstacle T and surrounding terrain information to determine whether to pass over the obstacle T and a route to pass over the obstacle T. For example, when a height of the obstacle T is larger than a preset threshold height or a length of the obstacle T is shorter than a preset reference length, the controller 700 may determine to avoid the obstacle T rather than to pass over the obstacle T. Conversely, when the height of the obstacle T is smaller than the preset threshold height, the length of the obstacle T is longer than the preset reference length, or the obstacle T is connected to a wall or the like and has no other route (i.e., the obstacle T is a threshold), the control unit 700 may determine to pass over the obstacle T.

Meanwhile, the robot needs to maintain balance while passing over the obstacle. In particular, since two-wheeled robots maintain balance while being in contact with the ground at two points (or two surfaces), the robot is supported by the wheels in the left-right direction, but is not supported in the front-rear direction, and thus when an impact is applied in the front-rear direction, there is a disadvantage that the robot is prone to losing balance and toppling over.

In particular, when the functional module is disposed under the robot to expand or add the function of the robot, problems that the robot may topple over due to collision between the functional module and the obstacle, or the functional module is caught on the obstacle to prevent the robot from passing over the obstacle may occur.

In order to solve these problems, the method of the present invention further includes the module lifting operation S20 to prevent the functional module from being caught on the obstacle.

In the module lifting operation S20, the controller 700 may control the lifting of the functional module 900 coupled to the robot 1 when a distance D between the robot 1 and the obstacle T is within a preset reference distance Dr (D≤Dr).

For example, the distance D between the robot 1 and the obstacle T may be the shortest distance between the obstacle detection camera 610 and the obstacle T. Alternatively, the distance D between the robot 1 and the obstacle T may be the shortest distance between the cliff sensor 670 and the obstacle T.

In this case, the controller 700 may detect the angle between the ground B and a virtual straight line connecting the obstacle detection camera 610 to the obstacle (T) or the cliff sensor 670 to the obstacle T and calculate a distance between the front end of the functional module 900 and the obstacle or between the front end of the wheel 310 and the obstacle. Accordingly, the controller 700 may move the robot body 100 upward before the front end of the functional module 900 comes into contact with the obstacle T.

Specifically, in the module lifting operation S20, the controller 700 may control the suspension motor MS to increase the angle between the upper leg 210 and the lower leg 230. That is, the controller 700 may control the suspension motor MS to increase a distance between an upper end of the upper leg 210 and a lower end of the lower leg 230.

Under such control, as the leg unit 200 bent at a predetermined angle gradually extends, the robot body 100 may be lifted. For example, the robot body 100 in the module lifting operation S20 is higher from the ground than the robot body 100 in the obstacle detecting operation S10.

Accordingly, in the module lifting operation S20, the robot body 100 may move upward to lift away from the ground. That is, in the module lifting operation S20, a distance from the ground B to the upper end of the robot body 100 may be increased.

In this case, when the functional module 900 is coupled to the robot body 100, the functional module 900 in contact with the ground B may be lifted together with the robot body 100.

In this way, when the functional module 900 is lifted by the robot body 100, one end of the functional module 900 disposed closer to the obstacle may be disposed farther from the ground than the other end of the functional module 900 disposed farther from the obstacle. That is, when the functional module 900 moves upward together with the robot body 100, the front end of the functional module 900 may be disposed higher from the ground than the rear end of the functional module 900.

This is because the suction nozzle 920 disposed in front of the coupling unit 930 is heavier than an internal rear side of the module body 910 disposed behind the coupling unit 930. That is, since the coupling unit 930 is lifted by the robot body 100 and the part disposed behind the coupling unit 930 is the heaviest, the rear end of the functional module 900 sags downward by gravity.

With this configuration, when the robot body 100 passes over the obstacle T while moving forward, the front end of the functional module 900 may be positioned higher than the obstacle T, thereby preventing the front end of the functional module 900 from being caught on the obstacle T.

In addition, the lower surface of the functional module 900 may come into contact with the obstacle T, and the functional module 900 may support the lower side of the robot body 100 while the robot 1 passes over the obstacle T, thereby assisting the robot 1 in maintaining balance.

In addition, the overall center of gravity of the robot 1 with the functional module 900 lifted is lowered, thereby facilitating the robot 1 to maintain balance.

Accordingly, according to the present invention, when the robot body 100 passes over an obstacle, it is possible to prevent the functional module 900 from being caught on the obstacle and causing the robot 1 to topple over.

Meanwhile, the module lifting operation S20 of the present invention may be applied to not only a case in which the functional module 900 is coupled to the robot body 100, but also a case in which the functional module 900 is not coupled to the robot body 100.

That is, even in a state in which the functional module 900 is not coupled to the robot body 100, the robot body 100 may be lifted when the distance D between the robot 1 and the obstacle T is within the preset reference distance Dr (D≤Dr).

With this configuration, it is possible to prepare for the lifting of one wheel 310 in the balance maintaining operation S30 to be described below.

Meanwhile, as shown in FIGS. 15 and 16, when the robot enters the obstacle T at an oblique angle rather than perpendicular to the longitudinal direction of the obstacle T, only one wheel of the robot is lifted above the obstacle T. In this case, the robot may tilt to one side and topple over.

In particular, when a relatively heavy component among the components of the robot is disposed on the upper side of the robot, the center of gravity of the robot may be high, causing the robot to topple over even with a small tilt.

To resolve this issue, when the forward movement direction of the robot is disposed obliquely at a predetermined angle with respect to the longitudinal direction of the obstacle T, the conventional robot changes the traveling route and enters in the direction perpendicular to the obstacle T (see C2 in FIG. 15). In this case, since the pair of wheels of the robot simultaneously pass over the obstacle, the robot can be prevented from tilting to one side.

However, when the traveling route of the robot is changed as described above, there is a limitation that it may take more time for the robot to move to a target point.

In addition, due to the robot changing the traveling route, a region in which the robot does not travel within a predetermined distance from an obstacle may occur. In particular, in a state in which a functional module with a cleaning function is coupled as in the present invention, the existence of the above region may indicate the existence of a non-cleaning region. That is, when the route of the robot is forcibly changed to pass over an obstacle, there is a limitation that some functions of the robot cannot be used.

In order to resolve this issue, the method of the present invention further includes the balance maintaining operation S30, thereby controlling the leg unit 200 to maintain the balance of the robot body 100 when only one wheel 310 climbs onto an obstacle or the robot body 100 tilts to one side.

Meanwhile, the balance maintaining operation S30 may be performed not only after the module lifting operation S20, but also after omitting the module lifting operation S20 and may also be performed even when not coupled with the functional module 900. That is, the balance maintaining operation S30 is performed after the obstacle detecting operation S10, but may be performed after omitting the module lifting operation S20.

In the balance maintaining operation S30, when one of the pair of wheels 310 comes into contact with the obstacle T, the controller 700 may control the leg unit 200 to lift the wheel 310 in contact with the obstacle T.

Specifically, one of the pair of wheels 310 comes into contact with the obstacle T, and the wheel 311 in contact with the obstacle T may continuously rotate and move upward along the obstacle T. In this case, as the wheel 311 moves upward, the leg unit 200 and one side of the robot body 100 in the left-right direction may be lifted, causing the robot body 100 to tilt to one side.

In this case, the IMU sensor 660 may detect the tilt angle of the robot body 100 and transmit the angle to the controller 700 (S31).

In addition, when the robot body 100 is tilted at a preset reference angle or more with respect to a vertical line perpendicular to the ground, the controller 700 may move one of the pair of wheels 310 in the vertical direction. For example, when the robot body 100 is tilted at 5 degrees or more with respect to the vertical line, the controller 700 may control the leg unit 200 to lift the wheel 311 in contact with the obstacle T (S32).

The controller 700 may control one of the suspension motors MS to control the leg unit 200 connected to the wheel 311 in contact with the obstacle T, thereby decreasing the angle between the upper leg 210 and the lower leg 230. That is, the controller 700 may control the suspension motor MS to decrease the distance between the upper end of the upper leg 210 and the lower end of the lower leg 230.

Under such control, the leg unit 200 maintained at a predetermined angle gradually contracts, thereby maintaining the height of the robot body 100 in the left-right direction and preventing the robot body 100 from tilting beyond a preset reference angle.

Accordingly, in the balance maintaining operation S30, the height from the ground to the robot body 100 may be maintained. In addition, in the balance maintaining operation S30, only the wheel 311 that first comes into contact with the obstacle T may be lifted and may climb onto the obstacle T (see FIG. 17).

That is, in the balance maintaining operation S30, the height of the robot body 100 in the left-right direction is identically maintained, and the pair of wheels 310 may rotate while maintaining different heights from the ground.

Under such control, the robot 1 may lift one wheel 311 over the obstacle T while maintaining balance. Accordingly, the robot may pass over the obstacle T while preventing itself from tilting to one in the left-right direction.

Meanwhile, in the balance maintaining operation S30, when the pair of wheels 310 are in contact with the obstacle T, the lifted wheel 311 may be moved downward, thereby preventing the robot body 100 from tilting to one side.

Specifically, in a state in which one of the pair of wheels 310 is in contact with the obstacle T, when the wheel 312 not in contact with the obstacle T comes into contact with the obstacle T, the wheel 312 may continuously rotate and move upward along the obstacle T. In this case, the leg unit 200 and one of the robot body 100 in the left-right direction may re-tilt.

In this case, the IMU sensor 660 may re-detect the tilt angle of the robot body 100 and transmit the angle to the controller 700 (S31).

In addition, when the robot body 100 is tilted at a preset reference angle or more with respect to a vertical line perpendicular to the ground, the controller 700 may move one of the pair of wheels 310 in the vertical direction. For example, when the robot body 100 is tilted at 5 degrees or more with respect to the vertical line, the controller 700 may control the leg unit 200 to lower the wheel 311 in contact with the obstacle T (S32).

The controller 700 may control one of the suspension motors MS to control the leg unit 200 connected to the wheel 311 in contact with the obstacle T, thereby increasing the angle between the upper leg 210 and the lower leg 230. That is, the controller 700 may control the suspension motor MS to increase the distance between the upper end of the upper leg 210 and the lower end of the lower leg 230.

Accordingly, the robot body 100 may maintain balance without tilting to one side in the left-right direction.

Meanwhile, in the balance maintaining operation S30, when one of the pair of wheels 310 completely comes into contact with the obstacle T, it is possible to prevent the robot body 100 from tilting to one side.

When one of the pair of wheels 310 comes down from the obstacle T, the robot body 100 tilts to one side in the left-right direction due to a step between the obstacle T and the ground B.

In this case, the IMU sensor 660 may re-detect the tilt angle of the robot body 100 and transmit the angle to the controller 700 (S31).

In addition, when the robot body 100 is tilted at a preset reference angle or more with respect to a vertical line perpendicular to the ground, the controller 700 may move one of the pair of wheels 310 in the vertical direction.

For example, when the robot body 100 tilts at 5 degrees or more with respect to the vertical line, the controller 700 may control the leg unit 200 to increase the distance between the wheel 310 in contact with the obstacle T and the robot body 100. That is, when the robot 1 comes down from the obstacle T, the controller 700 may control the leg unit 200 being separated from the obstacle T to extend.

As another example, when the robot body 100 tilts at 5 degrees or more with respect to the vertical line, the controller 700 may control the leg unit 200 to decrease the distance between the wheel 310 in contact with the obstacle T and the robot body 100. That is, when the robot 1 comes down from the obstacle T, the controller 700 may control the leg unit 200 in contact with the obstacle T to contract.

Accordingly, the robot body 100 may maintain balance without tilting to one side in the left-right direction.

Accordingly, according to the present invention, even when the robot 1 enters the obstacle T at an oblique angle, the robot 1 may continuously travel straight (see C1 in FIG. 15) without changing a route. Accordingly, the robot 1 may travel the shortest distance to the target point.

In addition, even when the robot body 100 enters the obstacle T at an oblique angle, the robot body 100 may pass over the obstacle T while maintaining balance without tilting to one side and toppling over.

In addition, by reducing regions in which the existing robot 1 could not travel, such as near a threshold, the robot can be used without spatial limitations.

Although the present invention has been described in detail through specific embodiments, this is intended to specifically describe the present invention, and it is apparent that the present invention is not limited thereto, and the present invention can be modified or improved by those skilled in the art without departing from the technical spirit of the present invention.

All simple modifications or changes of the present invention fall within the scope of the present invention, and the specific scope of the present invention will be made clear by the appended claims.

## Claims

1. A robot comprising:
a robot body in which a motor and a battery are accommodated;
a pair of leg units provided on the robot body;
a pair of wheels rotatably coupled to the pair of leg parts, respectively; and
an arm including a rotational coupling unit rotatably coupled to both side surfaces of the robot body and a connector connecting the pair of rotational coupling units,
wherein, when the robot body is positioned within a preset reference distance from an obstacle of a predetermined height or more, the robot body moves upward away from the ground.

2. The robot of claim 1, further comprising a functional module detachably coupled to the robot body and moved together with the robot body,
wherein, when the robot body moves upward, one end portion disposed closer to the obstacle is disposed farther from the ground than the other end portion disposed away from the obstacle.

3. The robot of claim 1, wherein, when one of the pair of wheels comes into contact with the obstacle, the wheel in contact with the obstacle moves upward.

4. The robot of claim 3, wherein, when the wheel in contact with the obstacle moves upward, a height from the ground to the robot body is maintained.

5. The robot of claim 2, wherein the functional module includes:
a module body; and
a coupling unit disposed on an upper portion of the module body and coupled to the robot body, and
the functional module has a rear side heavier than a front side on which a suction nozzle is disposed with respect to the coupling unit.

6. The robot of claim 1, further comprising a sensor unit that is disposed on the robot body or the leg unit and measures a distance to the obstacle.

7. A robot comprising:
a robot body in which a motor and a battery are accommodated;
a pair of leg units provided on the robot body;
a pair of wheels rotatably coupled to the pair of leg parts, respectively; and
an arm including a rotational coupling unit rotatably coupled to both side surfaces of the robot body and a connector connecting the pair of rotational coupling units,
wherein, when one of the pair of wheels comes into contact with the obstacle, the wheel in contact with the obstacle moves upward.

8. A method of controlling a robot including a pair of leg units and wheels coupled to the leg units, respectively, the method comprising:
an obstacle detecting operation of detecting an obstacle disposed on a ground while the robot rotates the wheels and travels along the ground; and
a module lifting operation of lifting a functional module coupled to the robot when a distance between the robot and the obstacle is within a preset reference distance.

9. The method of claim 8, further comprising, after the module lifting operation, a balance maintaining operation of lifting the wheel in contact with the obstacle when one of the pair of wheels comes into contact with the obstacle.

10. The method of claim 8, wherein in the module lifting operation, a length from the ground to an upper end of the robot increases.

11. The method of claim 9, wherein in the balance maintaining operation, when the robot tilts at a preset reference angle or more with respect to a vertical line, one of the pair of wheels is moved in a vertical direction.

12. The method of claim 9, wherein in the balance maintaining operation, the pair of wheels rotate at different heights from the ground.

13. The method of claim 8, wherein in the obstacle detecting operation, the obstacle is detected by detecting a height difference of a predetermined height or more from the ground using at least one sensor.

14. A method of controlling a robot including a pair of leg units and wheels coupled to the leg units, respectively, the method comprising:
an obstacle detecting operation of detecting an obstacle disposed on a ground while the robot rotates the wheels and travels along the ground; and
a balance maintaining operation of lifting the wheel in contact with the obstacle when one of the pair of wheels comes into contact with the obstacle.
